(19) **Europäisches Patentamt / European Patent Office / Office européen des brevets**

(11) **EP 3 472 075 B1**

(12) **FASCICULE DE BREVET EUROPEEN**

(45) Date de publication et mention de la délivrance du brevet:
**23.11.2022 Bulletin 2022/47**

(21) Numéro de dépôt: **17740048.8**

(22) Date de dépôt: **14.06.2017**

(51) Classification Internationale des Brevets (IPC):
**B65G 43/08** *(2006.01)*     **B65G 47/31** *(2006.01)*
**B65G 47/68** *(2006.01)*     **G06T 7/00** *(2017.01)*

(52) Classification Coopérative des Brevets (CPC):
**B65G 43/08; B65G 47/31; B65G 47/682;**
B65G 2201/0285; B65G 2203/0233;
B65G 2203/0241; B65G 2203/0291;
B65G 2203/041

(86) Numéro de dépôt international:
**PCT/FR2017/051533**

(87) Numéro de publication internationale:
**WO 2017/216482 (21.12.2017 Gazette 2017/51)**

(54) **PROCÉDÉ ET DISPOSITIF D'ÉGRAINAGE DE COLIS A DÉBIT REGULÉ**

VERFAHREN UND VORRICHTUNG ZUM AUFTRENNEN EINER REIHE VON PAKETEN IN EINE EINZIGE DATEI IN EINEM GEREGELTEN TEMPO

THE METHOD AND DEVICE FOR SEPARATING A STRING OF PACKAGES INTO SINGLE FILE AT A REGULATED PACE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.06.2016 FR 1655628**

(43) Date de publication de la demande:
**24.04.2019 Bulletin 2019/17**

(73) Titulaire: **FIVES SYLEPS**
**56100 Lorient (FR)**

(72) Inventeurs:
• **PERROT, Pascal**
**56320 Meslan (FR)**
• **LE SAUZE, Philippe**
**56520 Guidel (FR)**
• **CHOLLET, Thierry**
**56100 Lorient (FR)**

(74) Mandataire: **Novagraaf Group**
**Chemin de l'Echo 3**
**1213 Onex/ Geneva (CH)**

(56) Documents cités:
DE-A1-102013 206 790     DE-A1-102013 212 900
US-A- 5 746 572     US-A1- 2004 104 100
US-A1- 2011 240 439

**Description**

La présente invention concerne un procédé de transfert et de présentation en file indienne de colis, à un débit de colis isolés déterminé.

Elle concerne également un dispositif de transfert de colis mettant en œuvre un tel procédé.

Elle trouve une application particulièrement importante bien que non exclusive dans le domaine de l'égrainage de charges de formes diverses, c'est à dire du transfert et de la séparation entre elles de charges à partir d'une couche de colis en nombre variable, en une file de colis isolés. Elle s'applique notamment et en particulier au cas de charges non nécessairement parallélépipédiques, présentant des centres de gravité élevés et/ou des fonds non plats entrainant de ce fait une instabilité des colis lors de leur transfert.

On connaît déjà des systèmes de transfert et de présentation en file longitudinale de colis. Ceux-ci mettent en œuvre des pinces de préhension qui viennent placer les colis successivement sur un tapis de transfert par exemple, et/ou utilisent des vérins pousseurs qui viennent recadrer les colis en file indienne au fur et à mesure de leur avancée sur un tapis.

De tels systèmes présentent des inconvénients. Ils nécessitent en effet des actionneurs (pinces, vérins pousseurs,...) coûteux, susceptibles de tomber en panne et entrainant un encombrement notamment dans le sens latéral des systèmes.

On connait également (WO 2014/17029 A ; US 2001/0030102 ; DE 10 2013 206790A ; US2004/1041100 et US5746572) des méthodes de tri et d'organisation de files de colis mettant en œuvre des tapis de vitesses différentes et/ou de hauteur et/ou d'orientation différentes.

En particulier, US 2004/104100 A1 divulgue un procédé de transfert et de présentation en file longitudinale ou sensiblement longitudinale dans le sens de leur transfert, de colis initialement disposés en rangs i, dans le sens transversal au sens de transfert, à un débit D de colis isolés déterminé, par au moins trois tapis convoyeurs successifs, à savoir un tapis convoyeur de régulation et deux tapis convoyeurs de mise en file.

Le document DE 10 2013 206790 A1 divulgue un dispositif de transfert et de présentation de colis en file longitudinale dans le sens de leur transfert à un poste de reprise des colis, dans lequel on dépose les colis par couche, chaque couche comprenant au moins deux rangs de colis transversaux au sens de transfert, comprenant un premier tapis convoyeur de réception véhiculant les colis ensemble dans une première direction à une première vitesse V1, un deuxième tapis convoyeur pour transfert selon ladite première direction à une deuxième vitesse V2 > V1, de sorte qu'il en résulte une séparation dans le sens longitudinal entre un premier rang i ou une première série alignée transversalement de au moins un colis et au moins un deuxième rang i+1 ou une deuxième série alignée transversalement d'au moins un colis du fait du différentiel de vitesses, un troisième tapis mobile en translation, un quatrième tapis situé dans le prolongement du troisième tapis, agencé pour être animé d'une quatrième vitesse déterminée V4 d'alimentation d'un cinquième tapis formant un angle avec la première direction et agencé pour être animé d'une vitesse V5, dans une deuxième direction, de sorte qu'il existe une différence de longueur de trajet des colis initialement situés dans le sens transversal de la première direction, et ledit cinquième tapis.

De tels systèmes ne prennent pas en compte tous les types de colis et notamment les colis présentant des centres de gravité élevés risquant de basculer lors du transport.

Ils ne permettent pas d'atteindre des débits importants (notamment supérieurs à 1 500 colis par heure), ni le traitement de couches de palettes présentant des produits imbriqués, c'est-à-dire organisés de façon non homogène dans leur répartition. En particulier en cas de colis imbriqués, des cadences supérieures à 1 000 colis/heure sont impossibles à atteindre avec les procédés de l'art antérieur.

On sait que lors de la constitution d'une palette de produits ou colis, ceux-ci peuvent être organisés en rangs homogènes, ou au contraire imbriqués en tout ou partie les uns dans les autres, en fonction de l'optimisation de remplissage de la palette dont les dimensions hors tout doivent être maintenues dans un cadre volumique déterminé. Cette imbrication et/ou l'augmentation des débits de traitement des colis génèrent alors des embouteillages et/ou des collisions entre eux entrainant un arrêt ou une mauvaise mise en file, ce qui limite considérablement les cadences de traitement.

La présente invention vise notamment à pallier ces inconvénients en proposant un procédé et un dispositif répondant mieux que ceux antérieurement connus aux exigences de la pratique, notamment en ce qu'elle permet un tri et une présentation de colis optimisés, de façon simple, efficace, à forte cadence (par exemple supérieure à 1 700 colis par heure, par exemple 1 800 ou encore 2 000 ou même 2 200 colis/heure), sans risque d'erreur et/ou d'embouteillage intempestifs et ce pour un coût particulièrement avantageux, et ce même en présence de colis instables et/ou obtenus à partir de palettes dont les couches présentent une répartition de produits ou colis en rangs imbriqués.

Avec l'invention le nombre d'actionneurs est plus limité, ce qui diminue les risques de panne, les coûts de maintenance et simplifie donc le fonctionnement de l'ensemble.

Grâce à l'invention l'alimentation en colis peut de plus être effectuée par un système de dépalettisation peu sophistiqué avec des débits importants (non tributaires d'un diagramme de temps trop long dû aux actionneurs).

La présente invention part notamment d'une idée différente, consistant à faire s'égrainer les colis naturellement par le biais de dispositions particulières des tapis ou convoyeurs sur lesquels reposent et se déplacent les colis à transférer et par une gestion calculée et régulée de l'alimentation et des vitesses respectives de chacun des tapis.

Dans ce but l'invention propose notamment un procédé de transfert et de présentation en file longitudinale ou sensiblement longitudinale dans le sens de leur transfert, de colis initialement disposés en rangs i (..., n-1, n, n+1, ...), dans le sens transversal au sens de transfert, à un débit D de colis isolés déterminé, par au moins trois tapis convoyeurs successifs, à savoir un tapis convoyeur de régulation et deux tapis convoyeurs de mise en file, dans lequel

après séparation entre eux des rangs adjacents dans le sens longitudinal,
on présente chaque rang i successivement sur le tapis convoyeur de régulation,
on mesure par des moyens de mesure optique les dimensions des espacements entre les colis d'extrémités dudit rang i et les côtés de référence interne et externe en vis-à-vis du dit tapis convoyeur de régulation ainsi que le nombre de colis du rang i sur ledit tapis,
à partir desdites mesures et par des moyens de calcul, on calcule la vitesse des tapis convoyeurs de mise en file pour maintenir le débit déterminé D, on calcule les trajectoires des colis et on détermine l'instant de lâchage à partir du tapis de régulation des colis dudit rang i, sur lesdits tapis convoyeurs de mise en file, en fonction des dits calculs pour que le colis interne du rang i ne rattrape pas le colis externe du rang i-1 et
on fait avancer ledit rang i sur les tapis de mise en file à l'instant de lâchage ainsi déterminé.

Dans des modes de réalisation avantageux, on a par ailleurs et/ou de plus recours à l'une et/ou à l'autre des dispositions suivantes :

- pour séparer les rangs adjacents dans le sens longitudinal, on dépose les colis par couche horizontale, chaque couche comprenant au moins deux rangs de colis i, i+1, sur un premier tapis convoyeur de réception véhiculant les colis ensemble dans une première direction à une première vitesse déterminée $V_1$,

et on fait ensuite avancer ces colis sur un deuxième tapis convoyeur pour transfert selon la première direction à une deuxième vitesse $V_2 > V_1$, le tapis de régulation,, de vitesse séquencée $V_3$, formant un troisième tapis situé en aval des dits premier et deuxième tapis ;

- la vitesse $V_1$ est choisie en fonction du nombre N de colis de la couche ;
- les colis d'au moins deux rangs adjacents sont imbriqués entre eux;
- le rapport des vitesses $V_2 / V_1$ est choisi en fonction des dimensions des colis en longueur L et en largeur l, et d'une dimension déterminée d'espacement E de séparation ou trou minimum entre colis, la dimension d'espacement E ou trou minimum étant celle que l'on veut voir respecter systématiquement entre deux colis adjacents de deux rangs adjacents différents (pour garantir leur non télescopage ultérieur lors de la suite du procédé) ;
- on fait avancer le rang i+1 sur le deuxième tapis que lorsque l'ensemble des colis du rang i précédent a atteint une certaine position déterminée par rapport à l'entrée sur ledit deuxième tapis;
- les tapis de mise en ligne comprenant un quatrième tapis animé d'une quatrième vitesse $V_4$ déterminée (pour augmenter la séparation dans le sens longitudinal des dits rangs ou séries entre eux, et un cinquième tapis formant un angle α avec la première direction et animé d'une vitesse $V_5$, dans une deuxième direction, on alimente lesdits quatrième et cinquième tapis, de sorte qu'il existe une différence de longueur de trajet des colis initialement situés dans le sens transversal de la première direction;
- on alimente le quatrième tapis en asservissant la vitesse $V_4$ et celle $V_5$ du cinquième tapis au nombre de colis du rang i présent sur le troisième tapis ainsi qu'à la position relative des colis d'extrémité du dit rang i par rapport aux côtés de référence interne et externe ;
- on redresse chaque colis situé au-delà d'une distance déterminée par rapport au bord intérieur du cinquième tapis par une rampe de guidage B en biais par rapport au sens de transfert selon un angle y, de sorte qu'on ramène lesdits colis vers l'intérieur dudit cinquième tapis ;
- l'angle α est compris entre 90° et 150°;
- on fait avancer les colis sur au moins un ensemble convoyeur complémentaire, dans une troisième direction ou sensiblement dans une troisième direction formant un deuxième angle avec la deuxième direction du cinquième tapis ;
- on redresse chaque colis par rapport à un plan horizontal déterminé dans une position identique de préhension par au moins une rampe de guidage motorisée, en biais par rapport au sens de transfert selon un angle aigu β par rapport à l'une des rives du convoyeur et on actionne un système de pivotement si nécessaire, pour placer les colis toujours dans le même sens par rapport à leur axe longitudinal.

L'invention propose également un dispositif mettant en œuvre le procédé tel que décrit ci-dessus.

Elle propose aussi un dispositif de transfert et de présentation de colis isolés en file longitudinale dans le sens de leur transfert à un débit D déterminé, à un poste de reprise des colis, dans lequel on dépose les colis par couche, chaque couche comprenant au moins deux rangs (i, i+1) de colis transversaux au sens de transfert,

comprenant un premier tapis convoyeur de réception véhiculant les colis ensemble dans une première direction à une première vitesse $V_1$,

un deuxième tapis convoyeur pour transfert selon ladite première direction à une deuxième vitesse $V_2 > V_1$, de sorte qu'il en résulte une séparation dans le sens longitudinal entre un premier rang i ou une première série, aligné transversalement, de au moins un colis et au moins un deuxième rang i+1 ou une deuxième série, aligné transversalement, d'au moins un colis du fait du différentiel de vitesses,

un troisième tapis mobile en translation de façon séquencée agencé pour être arrêté avant alimentation d'un quatrième tapis,

des moyens de mesure optique de la position en X-Y des colis dudit rang i ou de ladite série, du nombre des colis dudit rang i et des espacements qui les séparent et/ou qui séparent les colis d'extrémité des cotés interne et externe du troisième tapis à l'arrêt,

des moyens pour faire avancer le troisième tapis à une troisième vitesse $V_3$, et l'arrêter de façon séquencée (c'est-à-dire de façon successive ou intermittente par programmation spécifique),

un quatrième tapis situé dans le prolongement du troisième tapis, agencé pour être animé d'une quatrième vitesse déterminée $V_4$ d'alimentation d'un cinquième tapis formant un angle avec la première direction et agencé pour être animé d'une vitesse $V_5$, dans une deuxième direction, de sorte qu'il existe une différence de longueur de trajet des colis initialement situés dans le sens transversal de la première direction,

ledit cinquième tapis et

des moyens de calcul des vitesses $V_1$, $V_2$, $V_3$, $V_4$, $V_5$, des arrêts du troisième tapis et de détermination de l'instant d'introduction des colis sur le quatrième tapis à partir de paramètres déterminés incluant les dimensions des colis, les longueurs des tapis, le nombre de colis par couche, ainsi que les dimensions d'espacements et le nombre de colis par rang i mesurés optiquement, de façon à permettre l'égrainage des colis en file longitudinale ou sensiblement longitudinale, avec un débit D de colis isolés déterminé et sans risque de collision pendant leur transfert.

Avantageusement il comprend un ensemble convoyeur complémentaire de transfert dans une troisième direction ou sensiblement dans une troisième direction formant un deuxième angle avec la deuxième direction du cinquième tapis.

Egalement avantageusement le cinquième tapis comprend une rampe en biais par rapport au sens de transfert, de guidage des colis.

Les moyens de mesure optique agencés pour mesurer le nombre de colis de la série ou rang i qui va partir sur le quatrième tapis et les dimensions d'espacement ou trous entre les colis d'extrémité de ladite série et les côtés de référence interne et externe en vis-à-vis du troisième tapis comprennent une caméra CCD (par exemple 176 pixels x 132 pixels).

Celle-ci est par exemple située au-dessus du tapis à une distance H suffisante pour englober la largeur du tapis selon des angles d'ouverture x0x et y0y déterminés, par exemple respectivement de 60° et de 45°.

L'invention sera mieux comprise à la lecture de modes de réalisation donnés ci-après à titre d'exemples non limitatifs.

La présente invention se réfère aux dessins qui l'accompagnent dans lesquels :

La figure 1 est une vue en perspective axionométrique d'un dispositif mettant en œuvre le procédé selon un mode de réalisation de l'invention.

La figure 2 est une vue de dessus de la figure 1.

Les figures 3A et 3B montrent respectivement de profil et en perspective partielle le premier tapis convoyeur de la figure 1.

La figure 4 est une vue en perspective en partie éclatée d'un mode de réalisation du deuxième tapis convoyeur du dispositif de la figure 1.

La figure 5 montre un exemple de rampe de guidage (en biais) utilisable dans un mode de réalisation de l'invention comme par exemple celui de la figure 1.

La figure 6 est un schéma bloc illustrant les étapes initiales permettant le calcul de la vitesse des tapis.

La figure 7 illustre quatre exemples de couche de colis sur palette montrant différents types d'imbrications ou de non-imbrication.

La figure 8 donne une courbe illustrant le résultat du calcul de la vitesse $V_2$ du premier tapis en fonction du nombre de colis.

La figure 9 est une vue de dessus montrant un plan de palettisation avec colis disposés différemment mais non imbriqués.

La figure 10 montre une courbe illustrant dans un mode de réalisation de l'invention, les rapports de vitesse $V_2/V_1$ entre le premier tapis et le deuxième tapis en fonction de la largeur l (et/ou de la longueur) des colis.

La figure 11 donne en vue de dessus, le cheminement de trois colis initialement imbriqués, que l'on désimbrique partiellement grâce au rapport $V_2/V_1$ de vitesses entre tapis.

La figure 12 montre une courbe de détermination de la valeur optimale du rapport entre la vitesse $V_2$ du deuxième tapis et la vitesse $V_1$ du premier tapis, permettant l'optimisation de la desimbrication.

La figure 13 illustre schématiquement en vue de dessus et en perspective, une position initiale d'une couche de palette de colis imbriqués au niveau du premier tapis, et une position finale partiellement desimbriquée des colis au niveau des premier, deuxième et troisième tapis.

Les figures 14A et 14B représentent respectivement d'une part en vue de dessus les troisième et quatrième tapis, ainsi que les convoyeurs ou tapis suivants, et d'autre part un schéma bloc illustrant la commande desdits tapis.

La figure 15 est une vue agrandie de la figure 14A illustrant la trajectoire d'un colis en fonction de sa position initiale à la sortie du troisième tapis, selon le mode de réalisation de l'invention plus particulièrement décrit ici.

La figure 16 est une courbe donnant la longueur de la trajectoire suivie par un colis à partir de ses coordonnées initiales en Ox à la sortie du troisième tapis avec le système de tapis de la figure 15.

La figure 17 est une vue schématique en perspective du troisième tapis au niveau de la mesure optique.

La figure 18 est une vue schématique en élévation du troisième tapis avec moyens de mesure optique de la figure 17.

Les figures 19A à 19C illustrent trois types d'angles entre quatrième et cinquième tapis, selon des modes de réalisation de l'invention.

Les figures 20A à 20D donnent en perspective quatre étapes de transfert de colis montrant leur alignement progressif selon le mode de réalisation de l'invention plus particulièrement décrit ici.

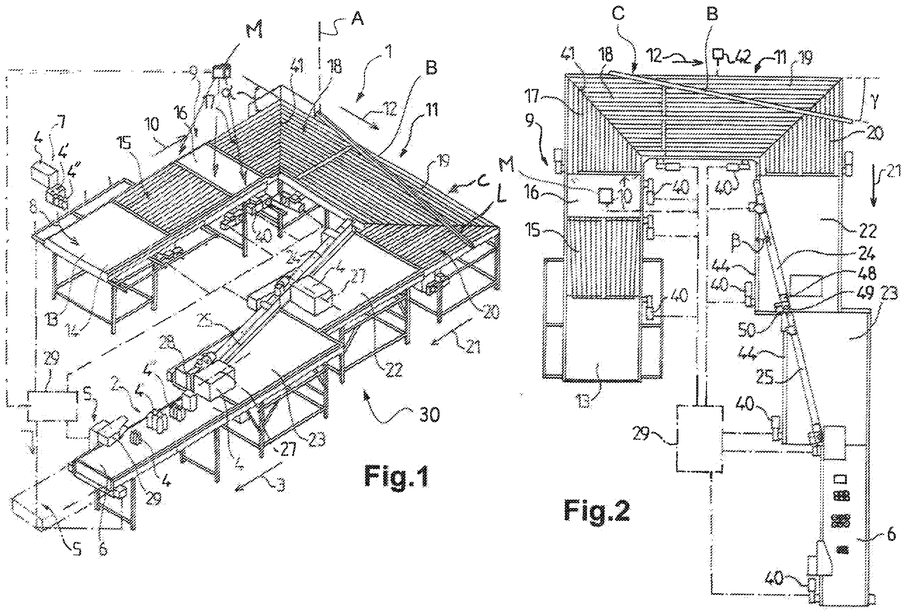

La figure 1 montre un dispositif 1 mettant un œuvre un procédé de transfert et de présentation en file indienne 2, c'est à dire longitudinale ou sensiblement longitudinale dans le sens 3 de leur transfert, de colis 4, 4', 4" à un poste de reprise 5 par exemple constitué par une table 6 convoyeuse qui va permettre ensuite la reprise des colis de façon connue en elle-même par l'intermédiaire par exemple de pinces et/ou tout autre moyen approprié.

Les colis 4, 4', 4" sont amenés par couche 7 horizontale de façon connue en elle-même (flèche 8) sur un premier ensemble convoyeur 9 véhiculant les colis dans une première direction ou sensiblement dans une première direction (flèche 10) sur un deuxième convoyeur 11 pour transfert desdits colis selon une deuxième direction 12 formant un angle α avec la première direction 10 de sorte que, comme on le verra plus précisément en référence aux figures suivantes, il soit observé une différence de longueur de trajets des colis initialement situés dans le sens transversal de la première direction ce qui avec les autres caractérisques de l'invention va permettre l'égrainage du colis en file longitudinale ou sensiblement longitudinale.

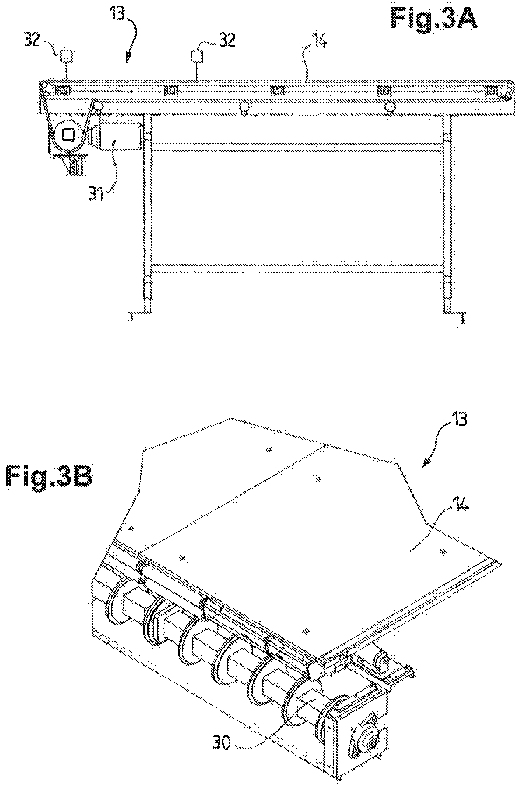

Dans le mode de réalisation plus particulièrement décrit ici le premier ensemble 9 comprend une table 13 de réception formée par un premier tapis ou convoyeur 14 qui sera décrit plus précisément en référence aux figures 3A et 3B, agencé pour être animé d'une première vitesse $V_1$.

De manière générale, les termes tapis et convoyeur seront considérés comme équivalents dans l'ensemble de la description.

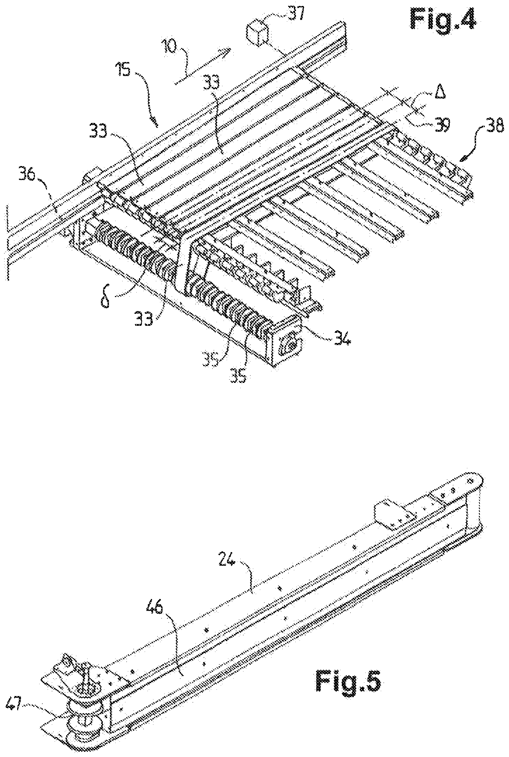

Le premier ensemble 9 comprend de plus au moins un deuxième tapis 15 agencé pour faire avancer les colis dans des premières directions par exemple parallèles ou divergentes comme cela va être plus précisément décrit en référence à la figure 4, à une vitesse $V_2 > V_1$, de sorte que la différence de vitesses entraine la séparation de rangs successifs.

En présence de bandes divergentes, la vitesse linéaire des colis d'un même rang est légèrement différente.

Ce deuxième tapis peut également être agencé (ou non) pour faire avancer les colis à des vitesses différentes par l'intermédiaire de bandes elles-mêmes de vitesses différentes $V_2$, $V'_2$, $V''_2$ ...

Le premier ensemble 9 comprend également situé après le deuxième tapis 15 un troisième tapis 16, animé d'une vitesse séquencée $V_3$ par exemple supérieure à la vitesse des parties en amont du premier ensemble avec des arrêts en nombre supérieur ou égal à 1.

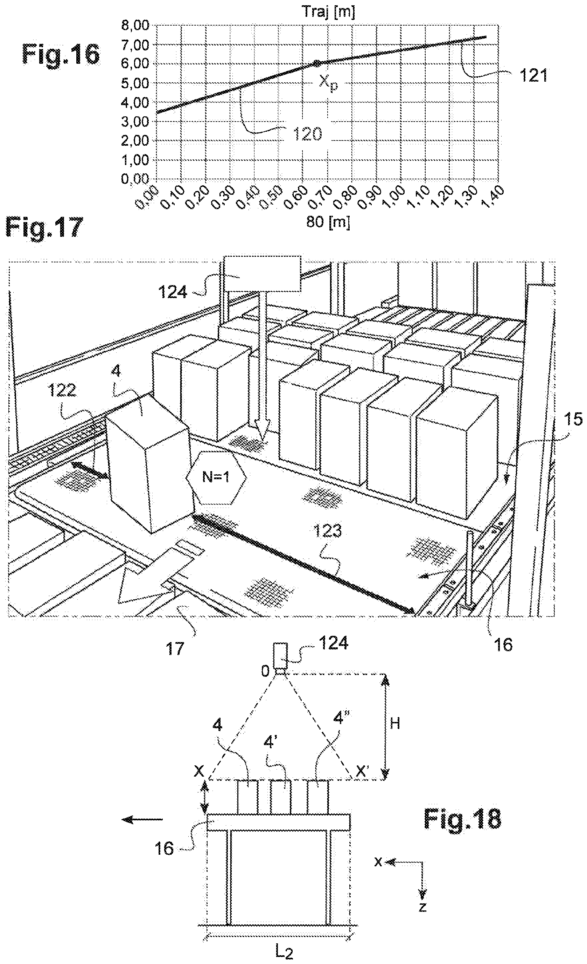

Selon le mode de réalisation de l'invention plus particulièrement décrit ici le troisième tapis comprend des moyens optiques M qui seront plus particulièrement décrits ci-après en référence aux figures 17 et 18.

Le dispositif de la figure 1 comprend de plus un quatrième tapis (d'angle) 17 appartenant au premier ensemble convoyeur 9 qui est celui qui va être en contact sans rupture de charge avec le deuxième ensemble convoyeur 11 formant l'angle α ici de 90° avec la direction 10 du premier ensemble 9 qui correspond à la direction de déplacement des colis.

Par sans rupture de charge, on entend un déplacement continu des colis d'un tapis à l'autre, sans reprise par des moyens élévateurs et/ou sans décrochement brusque vertical en hauteur.

Le quatrième tapis 17 est constitué de bandes parallèles à la direction 10 de largeur et de constitution identiques continues (par exemple dix-sept bandes modulaires), en noria autour d'un engrenage rotatif et de longueur progressive de l'intérieur vers l'extérieur. Toutes ces bandes sont animées de la même vitesse.

Sur les convoyeurs 16 et 17, chacune des charges d'un même rang se voit ainsi appliquer une vitesse linéaire identique.

Dans le mode de réalisation ici décrit le deuxième ensemble convoyeur 11 comprend quant à lui un cinquième tapis d'angle 18, puis un sixième tapis par exemple constitué de plusieurs bandes 19 centrales qui va lui-même être en contact avec un troisième ensemble convoyeur 20 transférant les colis dans une troisième direction 21, formant un deuxième angle a, ici également de 90° (par exemple) avec la direction 12.

Le troisième ensemble convoyeur 30 comporte un septième tapis d'angle 20 et une série de deux tapis convoyeurs situés en aval et véhiculant les colis dans la même direction 21, à savoir un premier tapis rectangulaire 22 et un deuxième tapis rectangulaire 23, par exemple identique au premier.

Chacun de ces tapis par exemple constitué de bandes parallèles fonctionnant de la même façon que le tapis 14, mais de dimensions différentes, comporte en partie latérale une rampe de guidage 24, 25, qui permet de guider les colis.

Ces rampes sont par exemple motorisées comme il sera décrit en référence à la figure 5.

Les tapis ou convoyeurs successifs de chacun des ensembles 9, 11 et 30 sont, comme illustré sur les figures 1 et 2, dans le prolongement les uns des autres.

De plus, au niveau de leur jonction, le deuxième tapis 15 coïncide avec le premier tapis 14, leur largeur prise dans le sens transversal étant sensiblement identique.

Il en est de même pour le troisième tapis 16 et le deuxième tapis 15, pour le quatrième tapis 17 et le troisième tapis 16, pour le sixième tapis 19 et le cinquième tapis 18.

De même, les convoyeurs successifs 20 et 22 présentent une largeur (prise dans le sens transversal) sensiblement identique au niveau de leur jonction et coïncident l'un avec l'autre.

En revanche, les deux tapis 22 et 23 sont légèrement décalés l'un par rapport à l'autre au niveau de leur jonction et ne coïncident que partiellement.

Par ailleurs, de façon préférée et comme illustré sur les figures 1 et 2, il n'y a pas de rupture de charge entre deux convoyeurs successifs et non seulement entre le quatrième tapis 17 et le cinquième tapis 18.

A la sortie du dernier tapis 23, les colis sont maintenant disposés en file indienne sur la table 6, de réception et d'évacuation vers le poste 5 de reprise des colis.

Plus précisément la table 6 comporte à son extrémité un système 26 propre à faire pivoter la charge ou le colis 4 (si nécessaire) pour le placer toujours dans le même sens par rapport à son axe longitudinal 27.

Le système 26 de pivotement est par exemple constitué par une butée amovible, qui vient se mettre en place lorsque les mesures effectuées par un capteur optique 28 le permettent. Le capteur va déterminer, en fonction d'une programmation préalable qui sera détaillée ci-après, s'il y a lieu d'effectuer un pivotement grâce à des moyens 29 de commande de l'ensemble connus en eux-mêmes (automate).

On va maintenant décrire plus précisément la table 13 en référence aux figures 3A et 3B.

L'alimentation du dispositif comme indiqué ci-avant est ici réalisée par un système de dépalettisation chargé de déposer la couche 7 de colis 4, 4', 4"... (issue d'une palette) sur le tapis 14 de réception.

La couche 7 peut être complète ou incomplète, ses dimensions hors tout s'inscrivant par exemple dans une surface définie par les standards actuellement rencontrés en logistique, à savoir 1 200 x 800 mm² ou 1 200 x 1 000 mm². Elle est de préférence complète pour pouvoir être manipulée par des moyens mécaniques.

Elle est constituée d'au moins deux rangs de colis 4, 4', 4"... pouvant présenter des orientations différentes.

Cette variation d'orientation peut être observée entre rangs consécutifs ou à l'intérieur d'un même rang.

Un ou plusieurs rangs peuvent être aussi imbriqués les uns dans les autres, ceci ayant été réalisé au départ afin optimiser les plans de rangement, en minimisant les volumes perdus et/ou en croisant les couches afin d'améliorer la stabilité de la palette.

La table de réception 13 est réalisée à partir d'une bande (ou premier tapis) 14 en forme de chaîne sans fin composée de maillons de plastique de façon connue en elle-même.

Les dimensions de cette table sont supérieures à celles de la couche réceptionnée, la bande 14 étant sans fin et engrenée en noria sur un arbre 30 (cf. figure 3B) entrainé par un motoréducteur 31, de façon connue en elle-même. Elle permet un transfert des charges à une vitesse, par exemple de l'ordre de 0,5m/s.

Un dispositif optique par exemple composé de quatre capteurs photoélectriques 32, assure le balisage de la zone, renseignant ainsi le système d'alimentation de l'automate 29 de l'état d'occupation de la table 14.

En référence à la figure 4, on a ensuite représenté une partie 15 du premier ensemble convoyeur 9, dite partie intermédiaire qui permet de mieux singulariser les colis.

Elle est par exemple réalisée à partir de treize bandes modulaires 33, de conception similaire à la bande 14 précédente mais plus fines. Ici encore ces bandes sont montées sur un (même) arbre 34, équipé de pignons 35, entrainé par un (seul) motoréducteur 36.

Dans ce mode de réalisation la distance transversale initiale δ entre l'axe longitudinal de chacune des bandes, augmente progressivement sur l'ensemble de la course pour aboutir à une distance Δ en bout de course comme représenté sur la figure 4 (avec par exemple Δ - δ = 100 mm ou 96 mm).

Dans ce mode de réalisation seule la bande centrale est implantée axialement dans le sens de déplacement et strictement parallèle à la direction 10.

Les douze autres bandes implantées symétriquement de part et d'autre (six de chaque côté) de la bande centrale, présentent donc par rapport à l'axe de déplacement une direction de plus en plus divergente.

Une telle disposition assure une meilleure singularisation des colis ou charges selon deux axes.

Une première séparation selon l'axe 10 de déplacement des charges 10 est réalisée grâce au différentiel de vitesse appliqué entre le premier tapis d'entrée et le deuxième tapis.

Par exemple ce différentiel peut ici être de l'ordre de 2 et provoque naturellement l'apparition d'une distance ou jeu longitudinal (ou trou) entre deux rangs consécutifs. Un capteur photoélectrique 37 placé en extrémité 38 de cette partie de convoyeur intermédiaire détecte alors l'espace entre deux colis.

Une seconde séparation selon l'axe normal au déplacement est due à la divergence que présente chacune des bandes entre elles.

Cette divergence provoque naturellement l'apparition d'une distance ou jeu transversal au déplacement entre chacune des charges d'un même rang (jusqu'à la valeur Δ - δ).

Dans le mode de réalisation de l'invention plus particulièrement décrit ici il est prévu un troisième tapis 16 (cf. figures 1 et 2).

Ce troisième tapis 16, par exemple d'une longueur (prise dans le sens de transfert des colis) sensiblement deux fois plus courte que la longueur du deuxième tapis 15 du premier ensemble convoyeur (en amont), est réalisé à partir d'une bande modulaire de conception similaire ou identique aux bandes précédentes par exemple du type de celles de la partie de convoyeur 13 (tapis 14) décrite ci-avant.

Un seul motoréducteur 40 du même type que les autres motoréducteurs entrainant les tapis et également prévu, agencé pour appliquer un différentiel de vitesse par exemple ici de l'ordre de 1,7 avec le deuxième tapis 15 et permettre les arrêts et redémarrages successifs.

La présence de ce rang ainsi que la détection de son transfert est réalisée par une caméra optique CCD placée à l'aplomb du troisième tapis comme cela sera détaillé plus loin et en combinaison avec une programmation de l'automate qui sera également explicitée ci-après.

Selon le mode de réalisation de l'invention plus particulièrement décrit ici le rang précédemment isolé est alors transféré sur le deuxième ensemble convoyeur 11.

Celui-ci comprend deux parties de convoyeur à savoir et tout d'abord une première partie ou cinquième tapis 18 qui forme un angle de 90° avec le quatrième tapis 17 du premier ensemble convoyeur, ce qui permet une jonction en biseau 41 (cf. figure 1 et 2) .

Cette jonction en biseau assure la continuité du transfert c'est à dire un transfert sans rupture de charge et matérialise ici la bissectrice de l'angle égal à 90°.

Il comprend ensuite une deuxième partie ou sixième tapis 19 de convoyeur de ce deuxième ensemble convoyeur 11, formée par des bandes parallèles du même type que celles décrites ci-avant et permet de déplacer les colis un peu plus loin vers un troisième ensemble convoyeur 20 qui sera décrit ci-après.

Dans l'exemple décrit plus précisément ici les deux parties de convoyeur 18 et 19 sont réalisées à partir de dix-sept bandes modulaires de conception similaire aux bandes précédentes, implantées parallèlement entre elles et guidées dans des rainures ménagées dans un support en matériau plastique.

L'ensemble de ces bandes est monté sur un même arbre entrainé par un motoréducteur, ici encore de façon connue en elle-même, assurant un déplacement des charges à par exemple une vitesse approximative comprise entre 15m/mn et 40m/mn, par exemple 24m/mn.

Chacune des charges d'un même rang se voit ainsi appliquer une vitesse linéaire identique

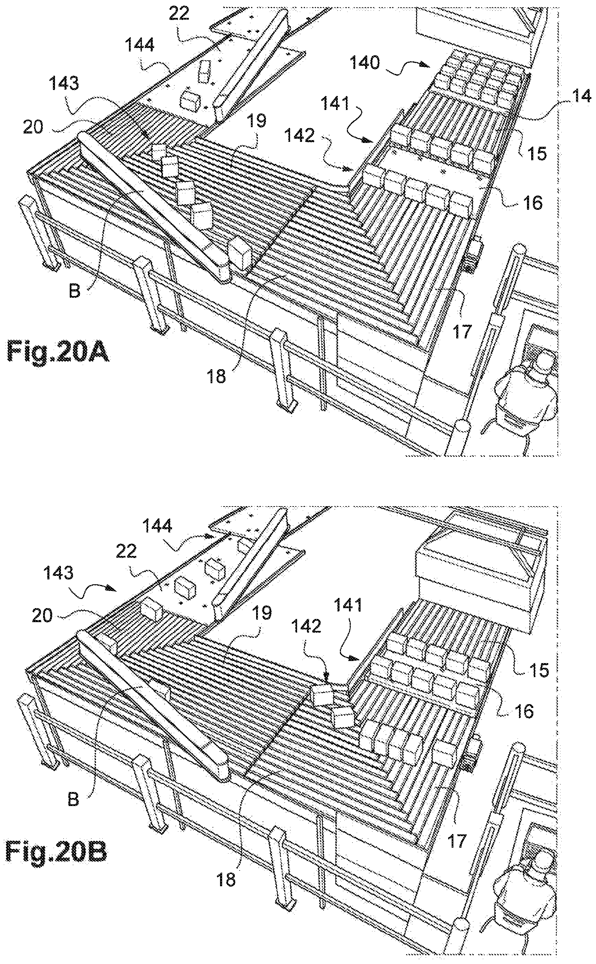

Lors du transfert à 90° entre la fin du premier ensemble convoyeur et le début du deuxième ensemble convoyeur 18, le trajet à parcourir par chacune des charges est sensiblement variable comme cela sera précisé en référence aux figures 20A à 20D ci-après.

En effet si on cherche à caractériser la position de chacune des charges on peut retenir que plus la position initiale se retrouve rapprochée du sommet de l'angle, plus le trajet que devra parcourir la charge est important.

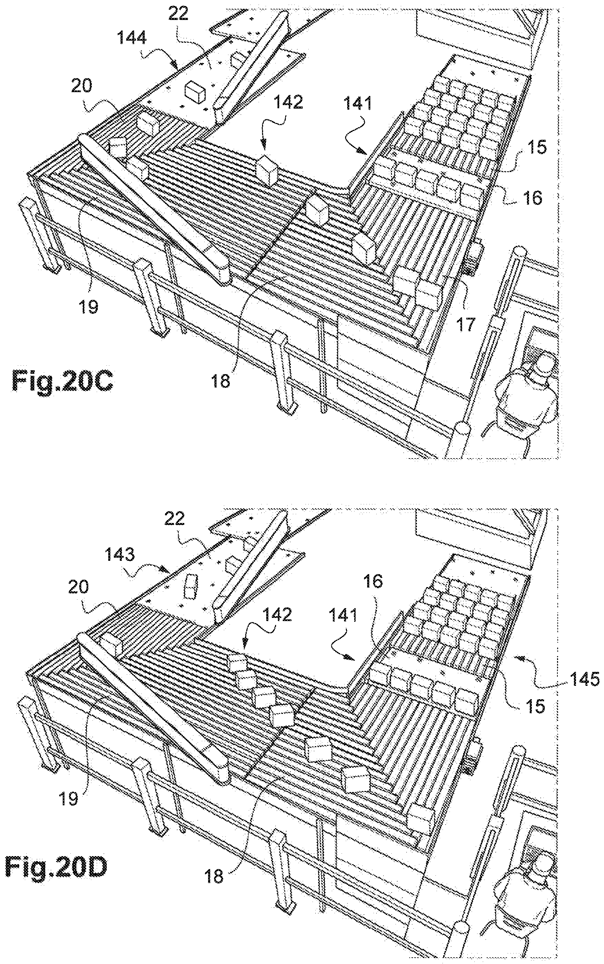

La vitesse linéaire appliquée à chacune des charges étant par hypothèse la même, on observe donc que chaque charge réalise son trajet dans un temps proportionnel à la distance à parcourir, créant ainsi à la fin du transfert un décalage en position entre chacune d'elles qui va entrainer grâce à la gestion régulée des autres paramètres et comme cela va être décrit ci-après leur alignement linéaire comme on le constate par exemple sur la figure 20D.

Il n'existe alors plus qu'un seul rang (en cours de mise en file indienne) sur l'ensemble des convoyeurs.

7

La zone présentant une forme complexe, son balisage est réalisé par un capteur optique par exemple un capteur laser à balayage 42 (cf. figure 2) dont la couverture est adaptable.

Le second ensemble comprend de plus une barre B droite, du type guidage motorisé, s'étendant sur une partie ou sur toute la longueur dudit deuxième ensemble, pour le guidage complémentaire des colis d'extrémité. La barre est fixée d'un côté sur le côté C extérieur du deuxième ensemble, à un axe A situé du côté du premier ensemble, autour duquel elle est réglable en rotation (angle γ) et comprend de l'autre côté une extrémité libre L.

L'extrémité libre L est donc réglable en position, la barre permettant de ramener les colis situés trop à l'extérieur, ce qui permet de mieux gérer les flux de colis égrainés.

Le réglage de l'angle γ est réalisé en fonction des vitesses, des dimensions et du nombre de colis à aligner.

Dans le mode de réalisation des figures 1 et 2, un troisième ensemble convoyeur à 90° est donc implanté à la suite pour parfaire la mise en file.

Une partie d'angles, symétrique et identique à la partie d'angle 17 est prévue.

L'alignement des charges est quant à lui complété par deux convoyeurs 22, 23 (ou tapis) à bandes, par exemple identiques entre eux, présentant une longueur approximative par exemple de 2,50 m.

Chaque tapis de type similaire au tapis 14, est équipé d'un guide vertical 24, 25 motorisé, indépendant, présentant un angle aigu β par rapport à l'une des rives ou cotés 44 du convoyeur, dont le choix du côté droit ou gauche déterminera le plan de référence de l'alignement.

Avantageusement, l'angle β est réglable de façon manuelle ou motorisée de façon programmée en fonction des vitesses et des dimensions de colis à aligner à partir d'une palette initiale de stockage.

L'action des guides est maintenue sur la totalité de la longueur de chaque tapis 22, 23, ceux-ci étant placés l'un derrière l'autre.

Le second tapis 23 est décalé sur l'axe transversal au déplacement, de manière à assurer une continuité de l'action d'alignement sur une distance ici par exemple de 5 m.

Le premier convoyeur 22 prend en charge l'alignement des charges présentant des trajectoires les plus courtes, le second réalignant le cas échéant les autres charges.

En référence à la figure 5 le guide 24, (25) comprend une bande verticale sans fin 46 se déplaçant longitudinalement de façon connue en elle-même autour d'un axe 47 actionné par un motoréducteur (non représenté).

L'orientation des charges est ici réalisée par des convoyeurs en bande d'une longueur approximative de 3 m. Ces convoyeurs sont actionnés par des moyens moteurs 48, 49, 50 connus en eux-mêmes et disposent donc les colis dans le sens transversal ou le sens longitudinal. A la sortie du convoyeur 23, les charges sont reprises par la table 6 et orientées avec le système 26. La fonction de ce sous ensemble est d'assurer une orientation unique suivant le grand côté longueur par exemple à toutes les charges.

Pour ce faire, sont prévues trois opérations élémentaires, à savoir la mesure de la longueur de l'objet, la comparaison de cette mesure avec une donnée théorique mémorisée dans la mémoire de l'automate 29 et le retournement de la charge le cas échéant par l'intermédiaire d'un vérin pousseur (non représenté).

La mesure de la longueur de la charge est par exemple réalisée de la manière suivante :

la charge 4 entre sur le convoyeur 6 et active la cellule photoélectrique formant le capteur optique 28.
le système de pilotage (automate 29) mémorise alors la position de la charge 4 donnée par ledit capteur 28.

Dès que la charge n'occulte plus la cellule photoélectrique, l'automate 29 mémorise à nouveau la position de la charge 4.

La longueur de la charge est alors obtenue par simple soustraction des deux valeurs précédemment mémorisées.

La valeur obtenue est ensuite comparée à la valeur théorique attendue. Si la différence est non nulle (à une tolérance près) on fait alors subir à la charge un retournement.

En effet le suivi en temps réel de la position de la charge sur le convoyeur 22 permet s'il y a lieu d'exercer une force à un point précis de ladite charge (en l'occurrence son premier coin) par un actionneur mécanique.

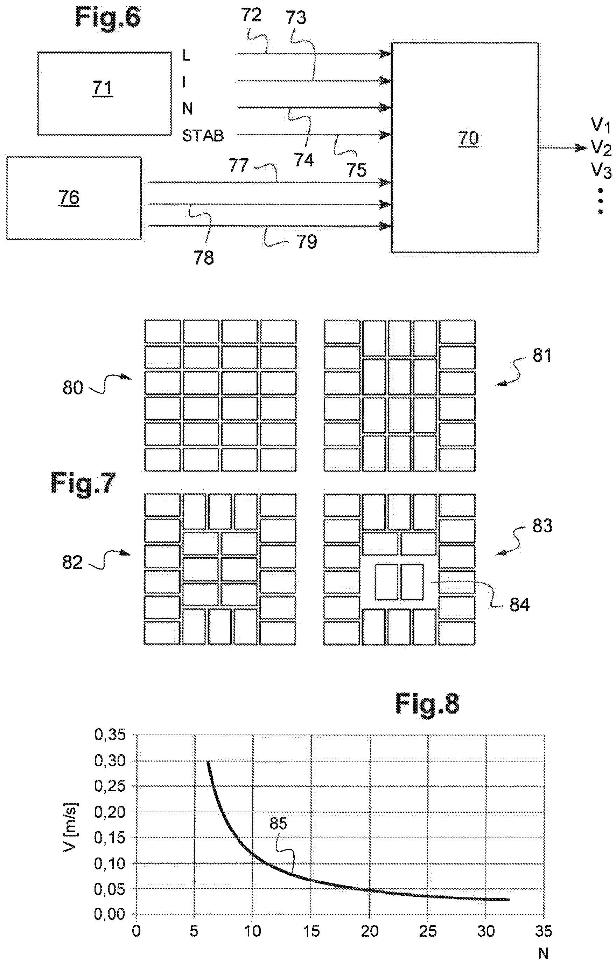

En référence à la figure 6, et selon le mode de réalisation de l'invention plus particulièrement décrit ici, chaque tapis convoyeur (14, 15, 16...) du dispositif 1 est une variable discrète modifiable en temps réel du système à concevoir en fonction de données d'entrée liées aux données initiales 71 sur les colis et les couches à savoir :

- longueur L du colis (flèche 72), par exemple 0,2 < L < 0,6m
- largeur l du colis (flèche 73), par exemple 0,145m < l < 0,4m
- le nombre N de colis d'une couche (flèche 74)
- une donnée caractérisant la stabilité du produit (flèche 75) STAB = (Stab, Non stab)

et en fonction des données 76 mesurées optiquement sur le tapis 16 grâce à la caméra CCD utilisée, à savoir :

- l'espace entre le coté externe ou rive externe du troisième tapis et la face externe en vis-à-vis du colis d'extrémité situé le plus à l'extérieur du dispositif (flèche 77)
- l'espace entre coté interne ou rive interne du troisième tapis et la face en vis-à-vis du colis d'extrémité situé le plus à l'intérieur du dispositif (flèche 78)
- le nombre de colis sur la série de colis prête à partir sur le tapis 17 (flèche 79).

A partir de ces données initiales, les vitesses $V_1$, $V_2$... des différents tapis vont pouvoir être calculées par l'automate 29 pour obtenir la mise en file sans embouteillage au débit D de colis isolés recherché.

La figure 7 montre à titre d'exemple quatre types de couches 80, 81, 82, 83 donnant respectivement quatre agencements d'imbrication de palettes, qui peuvent également être introduites sous forme de données dans le système 70 pour optimiser la désimbrication des rangs.

Plus précisément la couche 80 est un plan simple avec, pour chaque rang, les colis dans le même sens (pas d'imbrication).

La couche 81 montre un agencement de complexité moyenne avec deux sens de colis différents.

La couche 82 donne un agencement complexe où la notion de rang homogène n'existe plus.

La couche 83 donne quant à elle un plan où certains colis ne sont pas soumis à pression, laissant des espaces 84 entre colis au centre de la couche.

- Détermination de la vitesse $V_1$ du premier tapis 14 :
Le principe de la commande de vitesse consiste à adapter la vitesse $V_1$ de ce tapis de manière à ce que le débit de colis D qu'il fournit soit fixe et indépendant du nombre de colis N de la couche.

$$T_{cycle} = T_{dépose} + T_{évac}$$

$$T_{cycle} = \frac{3\ 600\ N}{D}$$

$$T_{évac} = \frac{l_{Tot}}{V_1}$$

$$l_{tot} = 1.5 * Larg\_Palette$$

$$V_1 = \frac{1.5 * Larg\_Palette}{T_{cycle} - T_{dépose}}$$

Pour le calcul on prévoit une borne inférieure Si N < 7 alors N := 7

Exemple d'Application Numérique

```
D = 1 800 C/h
```

```
Tcycle = 2 N (s)
```

```
Larg_Palette= 1 mètre
```

$$T_{dépose} = 7\ s$$

$$V_1 = \frac{1.5}{2N - 7} * \frac{N}{k_0}$$

Avec $k_0$ constante fonction de la palette

On a représenté sur la figure 8 une courbe 85 donnant la vitesse $V_1$ qui est donc fonction du nombre N de colis par couche, selon l'exemple d'application numérique ci-dessus.

- Détermination des vitesses $V_2$ et $V_3$ des deuxièmes et troisièmes tapis, pour séparation longitudinale des rangs ou séries de colis entre deuxième tapis et troisième tapis :
  L'objet de la séparation est d'obtenir des rangs ou séries de colis séparés longitudinalement d'une longueur paramétrable à savoir un espacement E entre colis ou trou minimum déterminé.

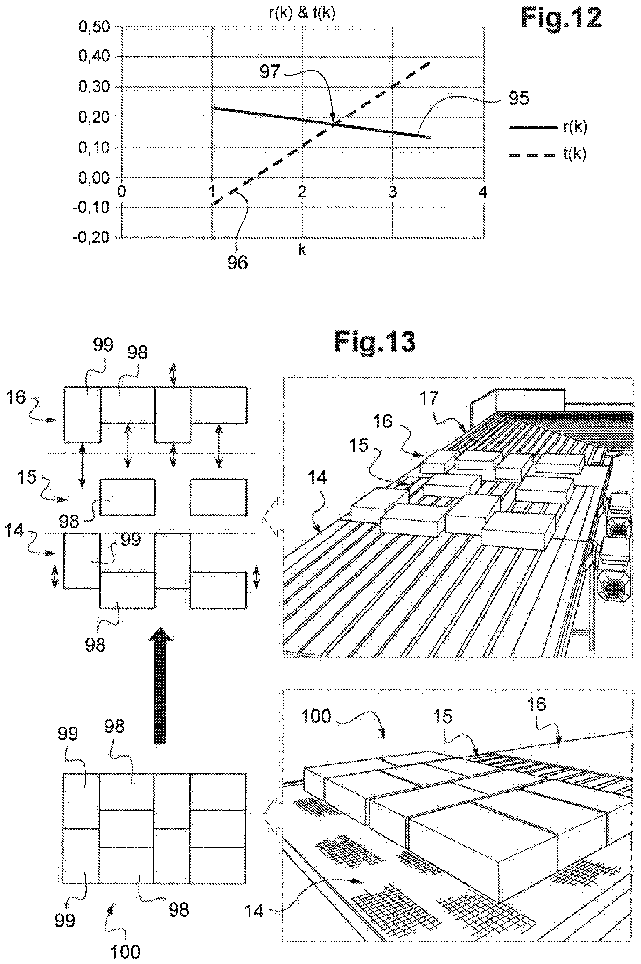

De façon générale, un rang (ou une série) de colis est défini comme un ensemble de colis qui est contenu dans une zone rectangulaire transversale, c'est-à-dire s'étendant perpendiculairement au sens de transfert des colis.
Lorsque les rangs sont séparés, un rang donné est disjoint des rangs adjacents. En d'autres termes, les zones correspondant à deux rangs adjacents ne se recoupent pas.
Au sein d'un même rang, les colis peuvent être plus ou moins éloignés les uns des autres (voir rang 15 et rangs 14 et 16 sur la figure 13).
On distingue ici, et par exemple deux plans de palettisation possibles :

• Sans imbrication Plan_Pal := (Simple, Complexité_Moy))
• Avec imbrication Plan_Pal := (Complexe),

On limite ici l'imbrication à deux rangs, c'est-à-dire qu'un colis ne peut appartenir à plus de deux rangs.

Soit :

$$l < L \leq 2.l$$

$$1 < \frac{L}{l} \leq 2$$

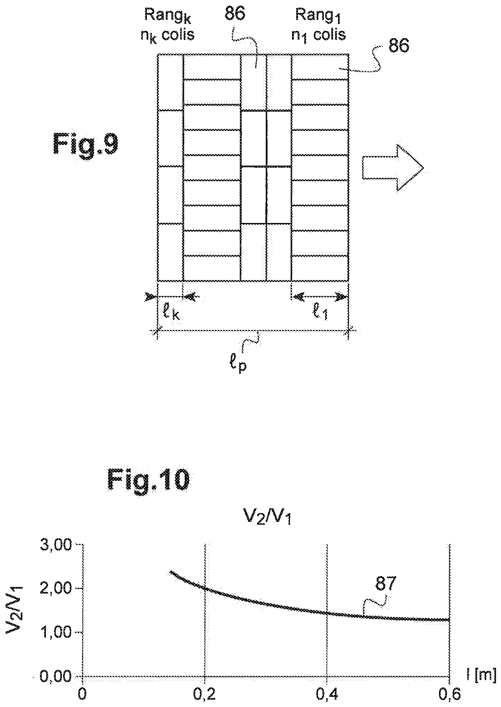

Dans le cas d'un plan de palettisation de colis non imbriqués (rangs ni, ... $n_h$ non imbriqués) correspondant à la figure 9 et de largeur li, ... $l_h$ on a une expression du $Trou_{min}$ comme suit :

$$Trou_{min} = \{\mu(l_{k+1} - l_k) + l_k\}(\frac{V_2}{V_1} - 1)$$

Avec : $\mu \in [0..1]$ Coefficient traduisant la longueur du produit nécessaire sur le deuxième tapis pour qu'il atteigne $V_2$.
$V_2$ est déterminée dans le cas le plus critique à savoir obtenir un $Trou_{mini}$ déterminé entre deux rangs consécutifs convoyés suivant la largeur l.
On a dans ce cas :

$$l_k = l_{k+1} = l_{min}$$

$$V_2 = V_1\left(1 + \frac{Trou_{min}}{l_{min}}\right)$$

Une application numérique donne par exemple et si on souhaite un $Trou_{min}$ de 20 cm :

On a $l_{min}$ = 14.5 cm et
On obtient : $V_2 = V_1 * 2.38$
On a représenté sur la figure 10, un exemple de courbe 87 $V_2/V_1$ obtenue en fonction de la largeur l des colis et correspondant à l'exemple décrit ci-dessus.

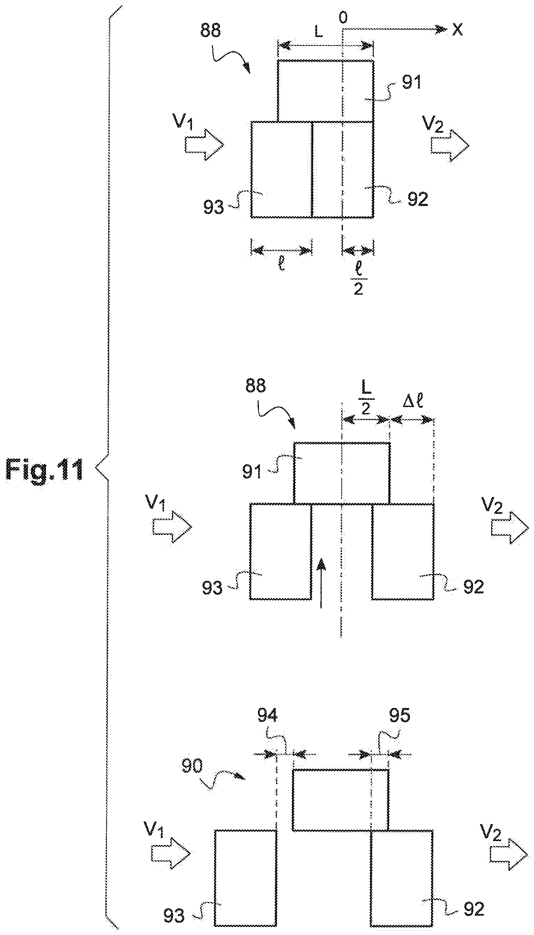

Dans le cas d'un plan de palettisation de colis imbriqués (du type de la couche 82 de la figure 7), on a représenté (cf. figure 11), un état initial 88 (to) un état intermédiaire 89 (ti = $t_0+\Delta t_0$) et l'état final 90 de trois colis 91, 92 et 93.

A l'état final les colis 91 et 93 sont séparés par un trou 94, tout en conservant un recouvrement 95 entre les charges 91 et 92.

Concernant l'état intermédiaire 89, on va avoir :

- $$\underline{A\ t\ =\ t_0}$$

$$X_1(t_0) = \frac{l}{2}$$

$$X_2(t_0) = \frac{l}{2}$$

$$X_3(t_0) = -\frac{l}{2}$$

- $$\underline{A\ t\ =\ t_1}$$

$$X_1(t_1) = \frac{l}{2}$$

Soit une distance parcourue par le colis 91 en un temps $\Delta\tau_1$:

$$\Delta l_1 = V_1 . \Delta\tau_1 = X_1(t_1) - X_1(t_0) = \frac{L - l}{2}$$

Durant ce même temps $\Delta\tau_1$, le colis 92 a quant-à-lui parcouru une distance $\Delta l_2$ :

$$\Delta l_2 = V_2 . \Delta\tau_1$$

$$X_2(t_1) = \frac{l}{2} + \frac{V_2}{V_1} . \frac{L - l}{2}$$

Après un temps $\Delta\tau_1$, le colis 93 aura quant-à-lui parcouru une distance $\Delta l_3$ :

$$\Delta l_3 = V_1 . \Delta\tau_1$$

Soit :

$$\Delta l_3 = \Delta l_1 = \frac{L-l}{2}$$

Ou encore

$$X_3(t_1) = \frac{L - 2.l}{2}$$

Discussion de la position de $X_3(t_1)$

On a :

$$L < 2.l \text{ donc } X_3(t_1) = \frac{L-2.l}{2} < 0$$

Le colis 93 est dès lors toujours sur le premier tapis.

Plus précisément et dans le cas d'une imbrication stricte, le colis 93 est exactement ou à peu près exactement à la jonction des deux tapis 14 et 15. L'écart longitudinal ainsi créé vaut :

$$\Delta l_{21} = \Delta l_2 - \Delta l_1 = (V_2 - V_1).\Delta\tau_1 = \frac{L-l}{2}.\left(\frac{V_2}{V_1} - 1\right)$$

La condition de conservation de l'imbrication des colis 91 et 92 s'écrit alors :

$$\Delta l_{21} < l$$

Soit :

$$V_2 < V_1.\frac{L+l}{L-l}$$

On observe par ailleurs les cas limites suivants :

$$L = 2.l \text{ (imbrication stricte)} \quad V_2 > 3.V_1.$$

$$L \to l \text{ (Produits à base carrée)}$$

Dans ce cas $V_2$ prend des valeurs trop importantes rendant la désimbrication difficile voire impossible.

• $\underline{\text{A } t = t_2}$

$$X_3(t_2) = \frac{l}{2}$$

Soit une distance parcourue en un temps $\Delta\tau_3$:

$$\Delta l_3 = V_1 . \Delta \tau_2 = X_3(t_2) - X_3(t_1) = \frac{3l - L}{2}$$

Durant ce même temps $\Delta \tau_3$ le colis 91 a parcouru une distance $\Delta l_1$ :

$$\Delta l_1 = V_2 . \Delta \tau_2$$

$$X_1(t_2) = \frac{L}{2} + \frac{V_2}{V_1} . \frac{3l - L}{2}$$

L'écart longitudinal ainsi créé durant $\Delta \tau_2$ vaut ainsi:

$$\Delta l_{31} = X_1(t_2) - X_3(t_2) = \frac{L - l}{2} + \frac{V_2}{V_1} . \frac{3l - L}{2}$$

La condition de désimbrication des colis 91 et 93 s'écrit :

$$\Delta l_{31} > L$$

Soit :

$$V_2 > V_1 . \frac{L + l}{3.l - L} \quad ou \ encore \quad V_2 > V_1 . \frac{\frac{L}{l} + 1}{3 - \frac{L}{l}}$$

On doit également tenir compte des cas limites suivants :

- L = *2.1* (imbrication stricte)

$$V_2 > 3 . V_1$$

Dans ce cas $V_2$ prend des valeurs trop importantes rendant la désimbrication difficile voire impossible. On a représenté ci-après l'équation du recouvrement r = f(k), qui va pouvoir être utilisée dans les calculs selon le mode de l'invention plus particulièrement décrit ici.

On pose

$$k = \frac{V_2}{V_1}$$

Le recouvrement r s'exprime alors par la relation

$$r = l - \Delta l_{21}$$

Soit

$$r(k) = l - \frac{L - l}{2}(k - 1)$$

Ou encore

$$r(k) = -k\left(\frac{L - l}{2}\right) + \left(\frac{L + l}{2}\right)$$

Cette relation est donc une droite 95 (figure 13) de pente négative
L'équation du trou t(k) s'exprime quant-à-elle par la relation

$$t = \Delta l_{31} - L$$

Soit

$$t(k) = \frac{L - l}{2} + k\left(\frac{3l - L}{2}\right) - L$$

Ou encore

$$t(k) = k\left(\frac{3l - L}{2}\right) - \left(\frac{L + l}{2}\right)$$

Ici encore sa représentation est une droite 96, mais cette fois-ci de pente positive
Exemple numérique :
L = 0.320 m , l = 0.235 m

$$r(k) = -0.0425\,k + 0.2775$$

$$t(k) = 0.1925\,k - 0.2775$$

Il existe donc une valeur optimale 97 de de k = $k_{opt}$ tel que r(k) = t(k).
Soit :

$$k_{opt} = 1 + \frac{L}{l}$$

A cette valeur optimale de k correspond :

• une valeur optimale du recouvrement $r_{opt} = r(k_{opt})$

• une valeur optimale du trou $t_{opt} = t(k_{opt})$

Tel que :

$$r_{opt} = t_{opt} = \frac{2l^2 - L^2 + Ll}{2l}$$

Dans l'exemple précédent on a :

$$k_{opt} = 2.3 \; ;$$

$$r_{opt} = t_{opt} = 0.222 \ m.$$

On remarque que cette valeur optimale de k :

- Est à rapprocher de la relation

$$k_{opt} = 1 + \frac{L}{l} = 1 + \frac{Trou_{min}}{l_{min}}$$

C'est-à-dire celle permettant de réaliser un Trou de longueur L entre deux colis transférés consécutivement selon le sens de leur largeur *l*.
- Mais qu'elle ne garantit pas la relation :

$$L + l - r + t < L_3 \ ou \ (L + l < L_3)$$

(où $L_3$ est la longueur du troisième tapis) permettant d'assurer la présence d'un seul « rang » parfaitement isolé sur ledit troisième tapis.

La relation précédente conduit à une valeur de k telle que :

$$k = \frac{L_3}{l}$$

On note que cette valeur de *k* est égale à $k_{opt}$ lorsque

$$L_3 = L + l$$

En conclusion on programme $V_2$ tel que :

$$V_2 = V_1 \cdot (1 + \frac{L}{l})$$

Soit pour :

$$1 \le \frac{L}{l} \le 2$$

Soit :

$$2 \le \frac{V_2}{V_1} \le 3$$

Avec des valeurs limites qui conduisent pour

- $L = l$ (colis de base carrée) $r_{opt} = t_{opt} = l$
- $L = 2.l$ (imbrication stricte) . $r_{opt} = t_{opt} = 0$

Ceci permet d'obtenir une désimbrication des colis 98 et 99 de la palette 100 comme représenté sur la figure 13, sur le troisième tapis 16.

Il vient ensuite pour $V_3$

$$V_3 = \beta . V_2$$

Avec β coefficient multiplicateur pris pour permettre la suite de l'optimisation des espacements de colis déterminés de manière expérimentale en fonction de l, L du colis. Par exemple β = 1,35.

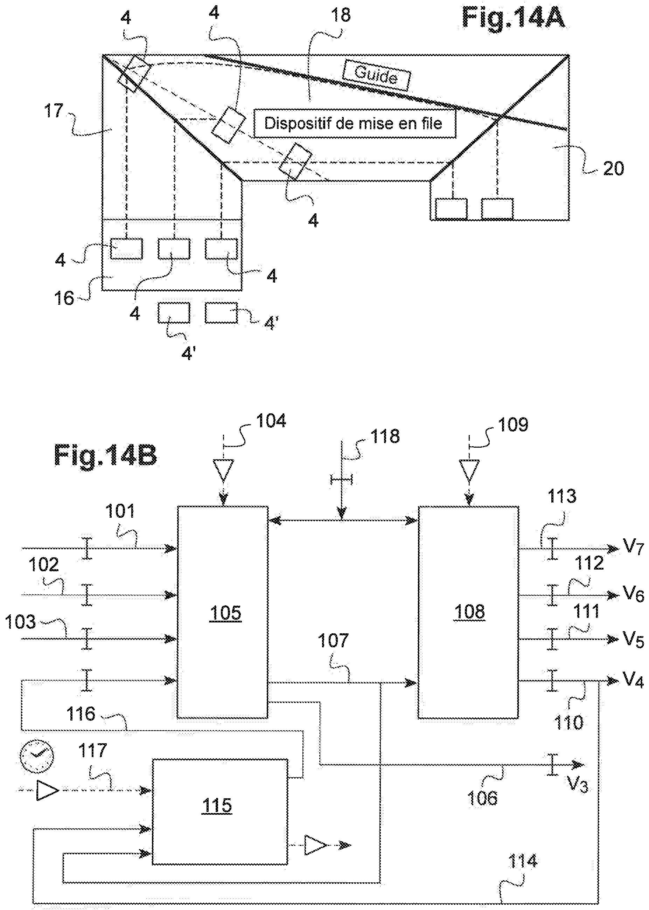

On va maintenant décrire les étapes algorithmiques de détermination des commandes des quatrième, cinquième et autres tapis suivants et ce plus particulièrement en références aux figures 14A, 14B, 15 et 16.

Le problème que cherche à résoudre l'invention consiste, à partir d'une alimentation en rangs successifs à débit constant, à alimenter le procédé en aval à débit de colis (un par un) constant.

Or le nombre de colis appartenant à deux rangs d'une même couche de colis donné n'est pas nécessairement constant, soit du fait de l'arrangement des rangs soit du fait de leur imbrication.

Le principe de fonctionnement du présent dispositif 1 (de mise en file) a donc pour objet de réguler l'alimentation du poste de reprise 5 en asservissant la vitesse $V_x$ des convoyeurs ou tapis 17, 18, 19, 20, 22 aux nombres de colis Nb_Colis du rang présent sur le troisième tapis 16 ainsi qu'à la position des colis situés aux extrémités du rang Pos_Colis_Ext et Pos_Colis_Int.

Plus précisément et en référence à la figure 14B, une fois obtenue par la photographie numérique de la caméra M située au-dessus du troisième tapis la position du colis externe (entrée 101), la position du colis interne (entrée 102), le nombre de colis (entrée 103) et après détection (entrée 104) de la présence du rang ou de la série sur ledit troisième tapis, on détermine (carré 105) la vitesse $V_3$(flèche 106).

On calcule à partir des résultats, le signal 107 qui alimente le calcul 108 dit « consommateur de file », sur un évènement périodique (signal 109).

On en déduit (110, 111, 112, 113) les vitesses $V_4$, $V_5$, $V_6$ et $V_7$.

La vitesse $V_4$ est quant à elle réinsérée (flèche 114) dans le bloc de calcul 115 estimant la distance restant à parcourir pour chaque colis, qui permet à son tour (lien 114) d'être réinjectée dans le bloc de calcul 105 pour permettre l'optimisation de la gestion des distances en temps réel ou quasiment en temps réel de façon à éviter les risques de collision et/ou d'embouteillage entre colis (temps 117 de rafraichissement par exemple toutes les 20 millisecondes).

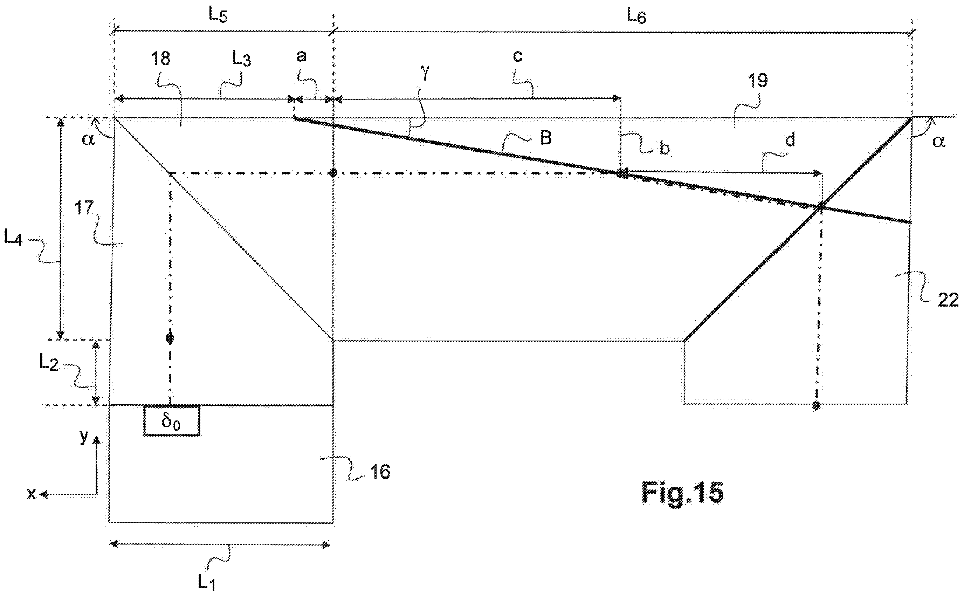

Dans le bloc 105 et après acquisition des données produites par le capteur d'images CCD, on positionne le centre des charges suivant le repère O-X,Y (voir également figure 15).

On calcule ensuite la longueur des trajets parcourus par le colis le plus à l'extérieur ($D_{ext}$) et la plus l'intérieur ($D_{int}$).

Puis on calcule la vitesse ($V_{xr+1}$) qu'il faudra appliquer au rang r + 1 lorsque le dernier colis du rang r sera évacué. On évalue alors la condition de lâché du rang r + 1 avec une formule du type :

$$D_{int} - E_{est} > \frac{V_{xr+1} + 3600}{D}$$

avec

$E_{est}$ : estimation de la position du colis le plus à l'extérieur du rang r, réalisée périodiquement en 115 (cf. figure 14B) avec une périodicité par exemple de 20 ms.

Si la condition de « lâché » est remplie, le rang r + 1 est lâché sur le quatrième convoyeur 17 à la vitesse $V_3$. Tous les colis d'un même rang sont ainsi lâchés au même instant.

Sinon, il y a arrêt du troisième tapis.

Le bloc 108 dit consommateur de file est quant à lui programmé comme suit.

Début ou initialisation des vitesses.

$$V_4 = V_5 = V_6 = V_7 = V_{xr} = V_{Def} = V_{-courante}$$

Avec $V_{Def}$ : vitesse choisie par défaut et introduite en 118 (paramètres) dans le système.

Cycle :

$$V_4 = V_5 = V_6 = V_7 = V_{xr+1} = V_{-courante}$$

On a représenté sur la figure 15 les éléments permettant le calcul des trajectoires, la trajectoire d'un colis étant égale à la somme des trajectoires définies de façon connue en fonction de la largeur $L_1$ des tapis et des longueurs $L_2$, $L_3$ (a, b, c) , $L_4$, $L_5$, $L_6$, $L_7$ et des angles $\alpha$, $\alpha$', avec :

$L_1$ : largeur des troisième et quatrième tapis,
$L_2$ : longueur de la partie droite du quatrième tapis,
$L_4 = L_5$ : longueur du côté externe des quatrième et cinquième tapis.
$L_3 = L_5$ -a avec a= distance entre point d'attache de la rampe B et début du sixième tapis,
b et c : paramètres définis ci-après.
$L_6$ : longueur du plus grand côté du sixième tapis.
$L_7 = L_4$ : longueur du plus grand côté du septième tapis.
$\alpha$ : angle entre côtés externes respectivement entre quatrième et cinquième tapis et entre sixième et septième tapis.

Au vu de la figure 15, deux cas sont à considérer :
La trajectoire interfère avec le guide B.
La trajectoire n'interfère pas avec le guide B.
Chacune de ces trajectoires pour un colis situé à une distance $\delta_0$ du bord externe du troisième tapis peut être modélisée par une droite du type

$$\texttt{Traj}_i(\delta_0) = a_i \, \delta_0 + b_i$$

en appliquant les règles classiques de cumul et de trigonométrie.
On a par exemple donné ci-après et également en référence à la figure 15, un tableau faisant état des mesures des valeurs des paramètres a et b dans le cas où la largeur $L_1$ des tapis est égale à 1 350 mm, où la distance $L_2$ est égale à 400 mm et où $L_4$ = 1 016 mm.
b est ici la distance existant entre le bord du sixième tapis 19 et le point d'impact de la trajectoire rectiligne, parallèle audit côté, du colis $\delta_0$ avec le guide B.

TABLEAU

| Segment | Avec Interférence | | Sans Interférence | |
|---|---|---|---|---|
| | a | b [m] | a | b [m] |
| Traj0 | 0.00 | 0.40 | 0.00 | 0.40 |
| Traj1 | 1.00 | 0.00 | 1.00 | 0.00 |
| Traj2 | -4.14 | 6.61 | 2.00 | 2.21 |
| Traj3 | 5.24 | -3.68 | 0.00 | 0.00 |
| Traj4 | 0.00 | 1.18 | 1.00 | 0.48 |
| $\sum_{i=0}^{i=4} Traji$ | 2.10 | 4.51 | 4.00 | 3.09 |

Ce qui donne :

Traj $(\delta_0)$ = 2,10 $\delta_0$ + 4,51 avec interférence
Traj $(\delta_0)$ = 4,00 $\delta_0$ + 3,09 sans interférence

La figure 16 montre la trajectoire suivie par le colis en fonction de la distance $\delta_0$ initiale du colis sur le troisième tapis sans interférence (120) avec le guide (jusqu'à $\delta_0$ = 0,65) et avec interférence (121) avec le guide (après).
On a ensuite représenté plus précisément en perspective (sur la figure 17) le troisième tapis 16 avec un seul colis sur le rang qui s'apprête à partir sur le quatrième tapis 17.
Les espaces 122 à gauche ($D_{int}$) et 123 à droite ($D_{ext}$) sont mesurés par le capteur ou caméra CCD 124 situé au-dessus.
Plus précisément la caméra ou capteur est implanté au-dessus du troisième tapis, la zone analysée étant un rectangle :
Le CCD (puce 4/3) définit alors un repère orienté (o, x, y) par exemple de

- o 176 pixels suivant x
- o 132 pixels suivant y
- o o étant le centre de l'image du CCD

On détermine la hauteur H d'implantation du capteur 3D par rapport à la « surface » à analyser, par exemple avec angle d'ouverture

$$\widehat{x0x'} = 60°,$$

, angle d'ouverture

$$\widehat{y0y'} = 45°,$$

largeur du troisième tapis par exemple = 1.350 et hauteur maximale des produits par exemple Hprodmax= 0.4 m, puis on calcule les différents paramètres par application des règles trigonométriques.

Sur la figure 18 on voit la caméra CCD 124 disposée (de façon réglable) à la hauteur H par rapport au-dessus des colis 4, 4', 4" disposés sur le troisième tapis, pour prendre les photographies et fournir à l'automate les données géométriques nécessaires.

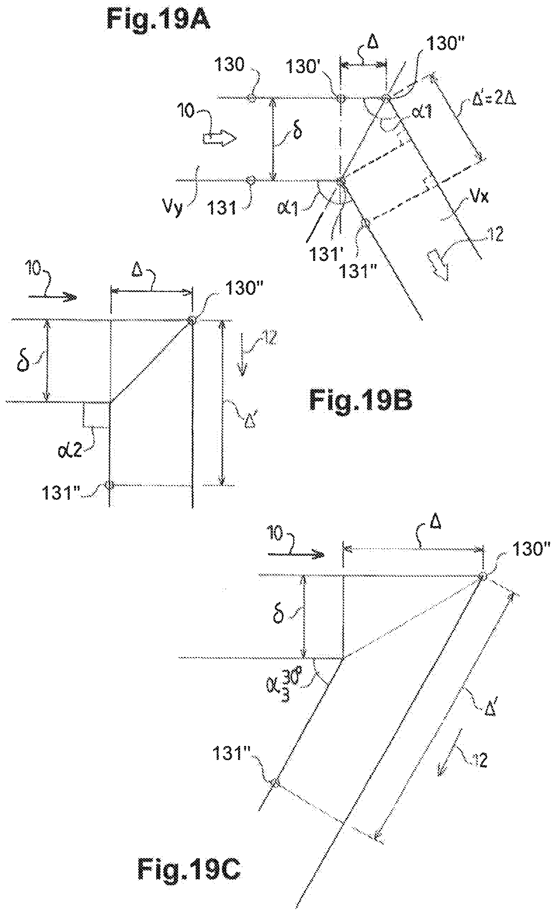

On a représenté sur les figures 19A, 19B et 19C les angles $\alpha$ pouvant exister entre les directions 10 et 12, entre un premier ensemble convoyeur et un deuxième ensemble convoyeur et/ou un deuxième ensemble et un troisième ensemble convoyeur (et/ou entre un n-1 ensemble et n ensemble ...).

La figure 19A illustre un angle $\alpha_1$ de 120°, la figure 19B un angle $\alpha_2$ de 90° et la figure 19C un angle rentrant $\alpha_3$ pour aller jusqu'à 30.

Ces angles vont permettre de déterminer les vitesses que l'on veut choisir en fonction des distances et du nombre de colis déposés sur les tapis.

On a par ailleurs représenté par des ronds 130, 130' ; 131' ; 130" ; 131' 'portions de deux colis amenés à suivre deux trajets parallèles matérialisés par des droites formant donc les angles $\alpha_1$, $\alpha_2$ et $\alpha_3$.

En fonction des distances $\Delta$ entre ces deux trajectoires, des vitesses respectives $V_y$ et $V_x$ des parties d'angles des premier et deuxième ensembles convoyeurs et de l'angle, on détermine alors par simples règles de calcul trigonométriques les paramètres de fonctionnement.

On a va maintenant décrire en référence aux figures 20A, 20B, 20C et 20D un exemple de mise en œuvre du procédé de transfert et d'alignement de colis selon le mode de réalisation de l'invention plus particulièrement décrit ici.

A partir d'une couche 140 de colis qui est placée sur un premier tapis 14 animé d'une première vitesse $V_1$, on fait avancer sur le deuxième tapis 15 animé d'une deuxième vitesse $V_2 > V_1$. De ce fait les rangs 141 et 142 successifs de colis se séparent, le rang 142 parti le premier arrivant alors sur le troisième tapis 16 où il est pris en photo pour déterminer le nombre et la distance $D_{ext}$ et $D_{int}$ des colis d'extrémité, le troisième tapis étant arrêté.

Ces valeurs sont transmises au calculateur 29, qui détermine alors la suite des opérations de la façon qui a été décrite ci-avant.

En fonction de ces calculs, on injecte le rang 142 vers le quatrième tapis qui commence à écarter les colis les uns des autres à proximité du côté interne des tapis (cf. figure 20B).

Il convient de noter que l'instant de lâchage du rang 142 sur le quatrième tapis 17 concerne bien tous les colis de ce rang.

En fonction de la distance des colis par rapport au bord interne et compte tenu de l'angle a, les colis plus externes sont progressivement repris et viennent s'échelonner comme représenté sur les figures 20C puis 20D.

Les colis les plus externes (143) viennent alors (retour à la figure 20A) se glisser s'il y a lieu le long du guide B qui permet de refocaliser les produits en file indienne comme cela apparait à nouveau à la figure 20B.

Grâce à une bonne programmation et gestion des vitesses, des mesures sur le troisième tapis, et des paramètres de fabrication dimensionnelle du dispositif, il est ainsi possible d'obtenir un débit optimisé, régulé et constant de colis isolés au niveau du huitième tapis et suivant.

Comme il va de soi et comme il résulte également de ce qui précède, la présente invention n'est pas limitée aux modes de réalisation plus particulièrement décrits. Elle embrasse les variantes limitées par les revendications, et notamment celles où d'autres rampes de guidage fixe ou mobile sont positionnées par exemple sur le deuxième ensemble convoyeur, et/ou les rampes de guidage ne sont pas motorisées.

**Revendications**

1. Procédé de transfert et de présentation en file longitudinale ou sensiblement longitudinale dans le sens de leur transfert, de colis (4, 4', 4" ; 91, 92, 93) initialement disposés en rangs i (..., n-1, n, n+1, ...), dans le sens transversal au sens de transfert, à un débit D de colis isolés déterminé, par au moins trois tapis convoyeurs successifs, à savoir un tapis convoyeur de régulation (16) et deux tapis convoyeurs de mise en file (17, 18), dans lequel

   - après séparation entre eux des rangs adjacents dans le sens longitudinal,

   on présente chaque rang i successivement sur le tapis convoyeur de régulation (16),

   - on mesure par des moyens M de mesure optique les dimensions des espacements entre les colis d'extrémités dudit rang i et les côtés de référence interne et externe en vis-à-vis du dit tapis convoyeur de régulation (16) ainsi que le nombre de colis du rang i sur ledit tapis,

   à partir desdites mesures et par des moyens de calcul (29)

   - on calcule la vitesse des tapis convoyeurs de mise en file pour maintenir le débit déterminé D,
   - on calcule les trajectoires des colis et
   - on détermine l'instant de lâchage des colis dudit rang i à partir du tapis de régulation sur lesdits tapis convoyeurs de mise en file, en fonction des dits calculs pour que le colis interne du rang i ne rattrape pas le colis externe du rang i-1 et
   - on fait avancer ledit rang i sur les tapis de mise en file (17, 18) à l'instant de lâchage ainsi déterminé.

2. Procédé selon la revendication 1, **caractérisé en ce que**, pour séparer les rangs adjacents dans le sens longitudinal, on dépose les colis par couche (7) horizontale, chaque couche comprenant au moins deux rangs de colis i, i+1, sur un premier tapis (14) convoyeur de réception véhiculant les colis ensemble dans une première direction à une première vitesse déterminée $V_1$, et on fait ensuite avancer ces colis sur un deuxième tapis (15) convoyeur pour transfert selon la première direction à une deuxième vitesse $V_2 > V_1$, le tapis de régulation (16), de vitesse séquencée $V_3$, formant un troisième tapis situé en aval des dits premier et deuxième tapis.

3. Procédé selon a revendication 2, **caractérisé en ce que** la vitesse $V_1$ est choisie en fonction du nombre N de colis de la couche.

4. Procédé selon l'une quelconque des revendications 2 et 3, **caractérisé en ce que** les colis (91, 92, 93) d'au moins deux rangs adjacents sont imbriqués entre eux.

5. Procédé selon l'une quelconque des revendications 2 à 4, **caractérisé en ce que** le rapport des vitesses $V_2 / V_1$ est choisi en fonction des dimensions des colis en longueur L et en largeur 1, et d'une dimension déterminée d'espacement E de séparation ou trou minimum entre colis, la dimension d'espacement E ou trou minimum étant celle que l'on veut voir respecter systématiquement entre deux colis adjacents de deux rangs adjacents différents.

6. Procédé selon l'une quelconque des revendications 2 à 5, **caractérisé en ce que** on fait avancer le deuxième rang i+1 sur le deuxième tapis (15) que lorsque l'ensemble des colis du rang i précédent a atteint une position déterminée par rapport à l'entrée sur ledit deuxième tapis (15).

7. Procédé selon l'une quelconque des revendications 2 à 6, **caractérisé en ce que** les tapis de mise en ligne comprenant un quatrième tapis (17) animé d'une quatrième vitesse $V_4$ déterminée pour augmenter la séparation dans le sens longitudinal des dits rangs entre eux, et un cinquième tapis (18) formant un angle $\alpha$ avec la première direction et animé d'une vitesse $V_5$, dans une deuxième direction, on alimente lesdits quatrième et cinquième tapis, de sorte qu'il existe une différence de longueur de trajet des colis initialement situés dans le sens transversal de la première direction.

**8.** Procédé selon la revendication 7, **caractérisé en ce que** on alimente le quatrième tapis (18) en asservissant la vitesse $V_4$ et celle $V_5$ du cinquième tapis au nombre de colis du rang i présent sur le troisième tapis (16) ainsi qu'à la position relative des colis d'extrémité du rang i par rapport aux côtés de référence interne et externe.

**9.** Procédé selon l'une quelconque des revendications 7 et 8, **caractérisé en ce que** on redresse chaque colis situé au-delà d'une distance déterminée par rapport au bord intérieur du cinquième tapis (18) par une rampe de guidage (B) en biais par rapport au sens de transfert selon un angle y, de sorte qu'on ramène lesdits colis vers l'intérieur dudit cinquième tapis.

**10.** Procédé selon l'une quelconque des revendications 7 à 9, **caractérisé en ce que** l'angle $\alpha$ est compris entre 90° et 150°.

**11.** Procédé selon l'une quelconque des revendications 7 à 10, **caractérisé en ce que** on fait avancer les colis sur au moins un ensemble convoyeur complémentaire, dans une troisième direction (21) ou sensiblement dans une troisième direction formant un deuxième angle avec la deuxième direction du cinquième tapis (18).

**12.** Procédé selon l'une quelconque des revendications précédentes, **caractérisé en ce que** on redresse chaque colis par rapport à un plan horizontal déterminé dans une position identique de préhension par au moins une rampe de guidage motorisée, en biais par rapport au sens de transfert selon un angle aigu $\beta$ par rapport à l'une des rives (44) du convoyeur et on actionne un système de pivotement si nécessaire, pour placer les colis toujours dans le même sens par rapport à leur axe longitudinal.

**13.** Dispositif (1) de transfert et de présentation de colis (4, 4', 4'' ; 91, 92, 93) en file longitudinale dans le sens de leur transfert à un poste de reprise (5) des colis, dans lequel on dépose les colis par couche, chaque couche comprenant au moins deux rangs de colis transversaux au sens de transfert,

    comprenant un premier tapis (14) convoyeur de réception véhiculant les colis (4, 4', 4"...) ensemble dans une première direction à une première vitesse $V_1$,
    un deuxième tapis (15) convoyeur pour transfert selon ladite première direction à une deuxième vitesse $V_2 > V_1$, de sorte qu'il en résulte une séparation dans le sens longitudinal entre un premier rang i ou une première série alignée transversalement de au moins un colis et au moins un deuxième rang i+1 ou une deuxième série alignée transversalement d'au moins un colis du fait du différentiel de vitesses,
    un troisième tapis (16) mobile en translation de façon séquencée pour être arrêté avant alimentation d'un quatrième tapis (17),
    des moyens M de mesure optique de la position en X-Y des colis dudit rang ou de ladite série, du nombre de colis dudit rang i et des espacements qui les séparent et/ou qui séparent les colis d'extrémité des cotés interne et externe du troisième des bords externe et interne dudit troisième tapis (16) à l'arrêt,
    des moyens pour faire avancer le troisième tapis à une troisième vitesse $V_3$, et l'arrêter de façon séquencée,
    un quatrième tapis (17) situé dans le prolongement du troisième tapis, agencé pour être animé d'une quatrième vitesse déterminée $V_4$ d'alimentation d'un cinquième tapis (18) formant un angle avec la première direction et agencé pour être animé d'une vitesse $V_5$, dans une deuxième direction, de sorte qu'il existe une différence de longueur de trajet des colis initialement situés dans le sens transversal de la première direction, ledit cinquième tapis,
    des moyens (29) de calcul des vitesses $V_1$, $V_2$, $V_3$, $V_4$, $V_5$ et des arrêts du troisième tapis et de détermination de l'instant d'introduction des colis sur le quatrième tapis à partir de paramètres déterminés incluant les dimensions des colis, les longueurs et largeurs des tapis, le nombre de colis par couche ainsi que les dimensions d'espacement et le nombre de colis par rang i mesurés optiquement, de façon à permettre l'égrainage en file longitudinale ou sensiblement longitudinale des colis avec un débit de colis isolés déterminé D et sans risque de collision pendant leur transfert à un débit D.

**14.** Dispositif selon la revendication 13, **caractérisé en ce qu'**il comprend un ensemble convoyeur complémentaire (20) de transfert dans une troisième direction (21) ou sensiblement dans une troisième direction formant un deuxième angle $\alpha$ avec la deuxième direction (12) du cinquième tapis.

**15.** Dispositif selon l'une quelconque des revendications 13 et 14, **caractérisé en ce que** le cinquième tapis (18) comprend une rampe (B) en biais par rapport au sens de transfert, de guidage des colis.

**Patentansprüche**

1. Verfahren zum Transfer und zur Präsentation von Paketen (4, 4', 4"; 91, 92, 93), die ursprünglich in Reihen i (..., n-1, n, n+1, ...) angeordnet sind, in einer längs oder im Wesentlichen längs verlaufenden Aneinanderreihung in Richtung ihres Transfers, in einer Richtung quer zur Transferrichtung, mit einem bestimmten Durchsatz D von Einzelpaketen, über mindestens drei aufeinanderfolgende Förderbänder, nämlich ein Regulierungsförderband (16) und zwei Anreihungsförderbänder (17, 18), wobei

   - nach dem Trennen von benachbarten Reihen in Längsrichtung

   jede Reihe i nacheinander auf dem Regulierungsförderband (16) präsentiert wird,

   - die Abmessungen der Abstände zwischen den Endpaketen der Reihe i und den inneren und äußeren einander gegenüberliegenden Referenzseiten des Regulierungsförderbandes (16) sowie die Anzahl der Pakete der Reihe i auf dem Band durch optische Messmittel M gemessen werden,

   aus den Messungen und durch Berechnungsmittel (29)

   - die Geschwindigkeit der Anreihungsförderbänder berechnet wird, um den bestimmten Durchsatz D aufrechtzuerhalten,
   - die Bahnen der Pakete berechnet werden und
   - der Zeitpunkt bestimmt wird, zu dem Pakete der Reihe i vom Regulierungsband auf die Anreihungsförderbänder freigegeben werden, in Abhängigkeit von den Berechnungen, damit das innere Paket der Reihe i das äußere Paket der Reihe i-1 nicht einholt, und
   - die Reihe i auf den Anreihungsbändern (17, 18) zum so bestimmten Freigabezeitpunkt vorwärts bewegt wird.

2. Verfahren nach Anspruch 1, **dadurch gekennzeichnet, dass** zur Trennung der benachbarten Reihen in Längsrichtung die Pakete in horizontalen Lagen (7), wobei jede Lage mindestens zwei Reihen von Paketen i, i + 1, umfasst, auf einem ersten Aufnahmeförderband (14) abgelegt werden, das die Pakete gemeinsam in einer ersten Richtung mit einer ersten bestimmten Geschwindigkeit $V_1$ transportiert, und diese Pakete anschließend auf einem zweiten Förderband (15) für den Transfer in der ersten Richtung mit einer zweiten Geschwindigkeit $V_2 > V_1$ vorwärts bewegt werden, wobei das Regulierungsband (16) mit einer sequenzierten Geschwindigkeit $V_3$ ein drittes Band bildet, das sich stromabwärts von dem ersten und dem zweiten Band befindet.

3. Verfahren nach Anspruch 2, **dadurch gekennzeichnet, dass** die Geschwindigkeit $V_1$ in Abhängigkeit von der Anzahl N der Pakete der Lage gewählt wird.

4. Verfahren nach einem der Ansprüche 2 oder 3, **dadurch gekennzeichnet, dass** die Pakete (91, 92, 93) von mindestens zwei benachbarten Reihen miteinander verschachtelt sind.

5. Verfahren nach einem der Ansprüche 2 bis 4, **dadurch gekennzeichnet, dass** das Verhältnis der Geschwindigkeiten $V_2/V_1$ in Abhängigkeit von den Abmessungen der Pakete in der Länge L und in der Breite 1 und von einer bestimmten Abmessung des Trennabstands E oder des minimalen Zwischenraums zwischen Paketen gewählt wird, wobei die Abmessung des Trennabstands E oder des minimalen Zwischenraums diejenige ist, die systematisch zwischen zwei benachbarten Paketen von zwei unterschiedlichen benachbarten Reihen eingehalten werden soll.

6. Verfahren nach einem der Ansprüche 2 bis 5, **dadurch gekennzeichnet, dass** die zweite Reihe i + 1 auf dem zweiten Band (15) erst dann vorwärts bewegt wird, wenn die Gesamtheit der Pakete der vorhergehenden Reihe i eine bestimmte Position in Bezug auf den Eingang zu dem zweiten Band (15) erreicht hat.

7. Verfahren nach einem der Ansprüche 2 bis 6, **dadurch gekennzeichnet, dass** die Anreihungsbänder ein viertes Band (17), das mit einer vierten Geschwindigkeit $V_4$ angetrieben wird, die dazu bestimmt ist, die Trennung in Längsrichtung der genannten Reihen untereinander zu erhöhen, und ein fünftes Band (18) umfassen, das einen Winkel $\alpha$ mit der ersten Richtung bildet und mit einer Geschwindigkeit $V_5$ in einer zweiten Richtung angetrieben wird, das vierte und das fünfte Band so beschickt werden, dass eine Differenz in der Weglänge der Pakete besteht, die sich ursprünglich in der Richtung quer zur ersten Richtung befinden.

8. Verfahren nach Anspruch 7, **dadurch gekennzeichnet, dass** das vierte Band (18) beschickt wird, indem die Geschwindigkeiten $V_4$ und $V_5$ des fünften Bandes von der Anzahl der auf dem dritten Band (16) vorhandenen Pakete der Reihe i sowie von der relativen Position der Endpakete der Reihe i in Bezug auf die innere und die äußere Referenzseite reguliert werden.

9. Verfahren nach einem der Ansprüche 7 und 8,
**dadurch gekennzeichnet, dass** jedes Paket, das sich jenseits eines bestimmten Abstands zum inneren Rand des fünften Bandes (18) befindet, durch eine Führungsrampe (B) schräg zur Transferrichtung in einem Winkel y aufgerichtet wird, so dass die Pakete zum Inneren des fünften Bandes zurückgeführt werden.

10. Verfahren nach einem der Ansprüche 7 bis 9,
**dadurch gekennzeichnet, dass** der Winkel $\alpha$ zwischen 90° und 150° liegt.

11. Verfahren nach einem der Ansprüche 7 bis 10,
**dadurch gekennzeichnet, dass** die Pakete auf mindestens einer komplementären Förderanordnung in einer dritten Richtung (21) oder im Wesentlichen in einer dritten Richtung, die einen zweiten Winkel zu der zweiten Richtung des fünften Bandes (18) bildet, vorwärts bewegt werden.

12. Verfahren nach einem der vorstehenden Ansprüche,
**dadurch gekennzeichnet, dass** jedes Paket in Bezug auf eine horizontale Ebene, die in einer identischen Greifposition durch mindestens eine motorisierte Führungsrampe bestimmt wird, schräg zur Transferrichtung in einem spitzen Winkel $\beta$ in Bezug auf eine der Kanten (44) des Förderbandes aufgerichtet wird und bei Bedarf ein Schwenksystem betätigt wird, um die Pakete in Bezug auf ihre Längsachse immer in der gleichen Richtung zu platzieren.

13. Vorrichtung (1) zum Transfer und zur Präsentation von Paketen (4, 4', 4"; 91, 92, 93) in einer längs verlaufenden Aneinanderreihung in der Richtung ihres Transfers an eine Aufnahmestation (5) für Pakete, in der die Pakete pro Lage abgelegt werden, wobei jede Lage mindestens zwei Reihen von Paketen quer zur Transferrichtung umfasst, umfassend

ein erstes Förderband (14) zur Aufnahme, das die Pakete (4, 4', 4"...) gemeinsam in eine erste Richtung mit einer ersten Geschwindigkeit $V_1$ transportiert,
ein zweites Förderband (15) zum Transfer in der genannten ersten Richtung mit einer zweiten Geschwindigkeit $V_2 > V_1$, so dass sich aufgrund des Geschwindigkeitsunterschieds eine Trennung in Längsrichtung zwischen einer ersten Reihe i oder einer ersten quer ausgerichteten Serie von mindestens einem Paket und mindestens einer zweiten Reihe i + 1 oder einer zweiten quer ausgerichteten Reihe von mindestens einem Paket ergibt,
ein drittes Band (16), das sequenziell translatorisch beweglich ist, um vor der Beschickung eines vierten Bandes (17) angehalten zu werden,
Mittel M zur optischen Messung der X-Y-Position der Pakete der Reihe oder Serie, der Anzahl von Paketen der Reihe i und der Abstände, die sie voneinander trennen, und/oder welche die Endpakete von der Innen- und Außenseite des dritten vom äußeren und inneren Rand des dritten Bandes (16) bei Stillstand trennen,
Mittel zum Vorwärtsbewegen des dritten Bandes mit einer dritten Geschwindigkeit $V_3$ und dessen sequenzielles Anhalten,
ein viertes Band (17), das sich in der Verlängerung des dritten Bandes befindet und so angeordnet ist, dass es mit einer bestimmten vierten Geschwindigkeit $V_4$ zur Beschickung eines fünften Bandes (18) angetrieben wird, das einen Winkel zu der ersten Richtung bildet und so angeordnet ist, dass es mit einer Geschwindigkeit $V_5$ in einer zweiten Richtung angetrieben wird, so dass eine Differenz in der Weglänge der Pakete besteht, die sich ursprünglich in der Richtung quer zur ersten Richtung befinden,
das fünfte Band,
Mittel (29) zur Berechnung der Geschwindigkeiten $V_1$, $V_2$, $V_3$, $V_4$, $V_5$ und der Stillstände des dritten Bandes und zur Bestimmung des Zeitpunkts der Zufuhr der Pakete auf das vierte Band ausgehend von bestimmten Parametern, welche die Abmessungen der Pakete, die Längen und Breiten der Bänder, die Anzahl der Pakete pro Lage sowie die Abstandsmaße und die Anzahl der optisch gemessenen Pakete pro Reihe i einschließen, so dass die Pakete in einer längs oder im Wesentlichen längs verlaufenden Aneinanderreihung mit einem bestimmten Durchsatz von Einzelpaketen D und ohne Kollisionsrisiko während ihres Transfers mit einem Durchsatz D aneinandergereiht werden können.

**14.** Vorrichtung nach Anspruch 13, **dadurch gekennzeichnet, dass** sie eine komplementäre Förderanordnung (20) zum Transfer in einer dritten Richtung (21) oder im Wesentlichen in einer dritten Richtung umfasst, die einen zweiten Winkel α mit der zweiten Richtung (12) des fünften Bandes bildet.

**15.** Vorrichtung nach einem der Ansprüche 13 und 14, **dadurch gekennzeichnet, dass** das fünfte Band (18) eine schräg zur Transferrichtung verlaufende Rampe (B) zur Führung der Pakete umfasst.

**Claims**

**1.** A method for transferring and presenting packages (4, 4', 4"; 91, 92, 93), initially arranged in rows i (..., n-1, n, n+1, ...) in the direction transverse to the transfer direction, in a longitudinal or substantially longitudinal line in the direction of their transfer at a determined flow rate D of individual packages by means of at least three successive conveyor belts, namely a regulating conveyor belt (16) and two lining-up conveyor belts (17, 18), wherein

- after separating adjacent rows from one another in the longitudinal direction,

each row i is presented successively on the regulating conveyor belt (16),

- the dimensions of the spacings between the end packages of said row i and the facing internal and external reference sides of said regulating conveyor belt (16) and the number of packages of row i on said belt are measured by means of optical measurement means M,

from said measurements and using calculation means (29)

- the speed of the lining-up conveyor belts is calculated in order to maintain the determined flow rate D,
- the trajectories of the packages are calculated, and
- the moment at which to release the packages of said row i from the regulating belt onto said lining-up conveyor belts is determined on the basis of said calculations so that the internal package of row i does not catch up with the external package of row i-1, and
- said row i is advanced onto the lining-up belt (17, 18) at the moment of release which has been determined in this way.

**2.** The method according to claim 1, **characterized in that,** in order to separate the adjacent rows in the longitudinal direction, the packages are deposited in a horizontal layer (7), each layer comprising at least two rows of packages i, i + 1 on a first receiving conveyor belt (14) transporting the packages together in a first direction at a first determined speed $V_1$, and then these packages are advanced onto a second conveyor belt (15) for transfer in the first direction at a second speed $V_2 > V_1$, the regulating belt (16) having a sequenced speed $V_3$ and forming a third belt downstream of said first and second belts.

**3.** The method according to claim 2, **characterized in that** the speed $V_1$ is selected on the basis of the number N of packages in the layer.

**4.** The method according to either of claims 2 and 3, **characterized in that** the packages (91, 92, 93) of at least two adjacent rows are nested together.

**5.** The method according to any of claims 2 to 4, **characterized in that** the speed ratio $V_2$:$V_1$ is selected on the basis of the length L and width I dimensions of the packages and a determined spacing dimension E of separation or a minimum gap between packages, the spacing dimension E or minimum gap being the one that must be systematically respected between two adjacent packages of two different adjacent rows.

**6.** The method according to any of claims 2 to 5, **characterized in that** the second row i + 1 is only advanced onto the second belt (15) when all of the packages of the previous row i have reached a determined position with respect to the inlet onto said second belt (15).

**7.** The method according to any of claims 2 to 6, **characterized in that** the line-forming belts comprise a fourth belt (17) driven at a determined fourth speed $V_4$ to increase the separation in the longitudinal direction of said rows from one another, and a fifth belt (18) forming an angle α with the first direction and driven at a speed $V_5$ in a second direction, said fourth and fifth belts being fed such that there is a difference in length of travel of the packages initially located in the direction transverse to the first direction.

8. The method according to claim 7, **characterized in that** the fourth belt (18) is fed by conditioning the speed $V_4$ and the speed $V_5$ of the fifth belt to the number of packages of row i present on the third belt (16) and to the relative position of the end packages of row i with respect to the reference internal and external sides.

9. The method according to either of claims 7 and 8, **characterized in that** each package located beyond a determined distance with respect to the internal edge of the fifth belt (18) is straightened by a guide ramp (B) at an angle with respect to the transfer direction at an angle γ such that said packages are brought back into said fifth belt.

10. The method according to any of claims 7 to 9, **characterized in that** the angle α is between 90° and 150°.

11. The method according to any of claims 7 to 10, **characterized in that** the packages are advanced onto at least one complementary conveyor assembly in a third direction (21) or substantially in a third direction forming a second angle with the second direction of the fifth belt (18).

12. The method according to any of the preceding claims, **characterized in that** each package is straightened with respect to a determined horizontal plane in an identical position for being gripped by at least one motorized guide ramp at an angle with respect to the transfer direction at an acute angle β with respect to one of the edges (44) of the conveyor and a pivoting system is actuated if necessary in order to always position the packages in the same direction with respect to their longitudinal axis.

13. A device (1) for transferring and presenting packages (4, 4', 4"; 91, 92, 93) in a longitudinal line in the direction of their transfer to a package pick-up station (5), wherein the packages are deposited in layers, each layer comprising at least two rows of packages that are transverse to the transfer direction,

comprising a first receiving conveyor belt (14) transporting the packages (4, 4', 4"...) together in a first direction at a first speed $V_1$,
a second conveyor belt (15) for transferring in said first direction at a second speed $V_2 > V_1$ such that a separation results in the longitudinal direction between a first row i or a first transversally aligned series of at least one package and at least a second row i + 1 or a second transversally aligned series of at least one package due to the difference in speed,
a third belt (16) translationally mobile in a sequenced manner in order to be stopped before feeding a fourth belt (17),
means M for optically measuring the X-Y position of the packages of said row or of said series, the number of packages of said row i and the spacings that separate them and/or that separate the end packages at the internal and external sides of the third one from the external and internal edges of said third belt (16) when stopped,
means for advancing the third belt at a third speed $V_3$, and for stopping it in a sequenced manner,
a fourth belt (17) forming an extension of the third belt and arranged to be driven at a fourth determined speed $V_4$ for feeding a fifth belt (18) forming an angle with the first direction and arranged to be driven at a speed $V_5$ in a second direction so that there is a difference in length of travel of the packages initially located in the direction transverse to the first direction,
said fifth belt,
means (29) for calculating speeds $V_1$, $V_2$, $V_3$, $V_4$, $V_5$ and stoppages of the third belt and for determining the moment for introducing the packages onto the fourth belt from determined parameters including the dimensions of the packages, the lengths and widths of the belts, the number of packages per layer as well as the spacing dimensions and the number of packages per row i measured optically so as to allow the packages to be deposited in a longitudinal or substantially longitudinal line at a determined flow rate of individual packages D and without risk of collision during their transfer at a flow rate D.

14. The device according to claim 13, **characterized in that** it comprises a complementary conveyor assembly (20) for transferring in a third direction (21) or substantially in a third direction forming a second angle α with the second direction (12) of the fifth belt.

15. The device according to either of claims 13 and 14, **characterized in that** the fifth belt (18) comprises a ramp (B) at an angle with respect to the direction of transfer for guiding the packages.

Fig.2

Fig.1

Fig.3A

32

13

32

14

31

Fig.3B

13

14

30

Fig.4

Fig.5

# Fig.6

# Fig.7

# Fig.8

## Fig.9

$Rang_k$
$n_k$ colis

86

$Rang_1$
$n_1$ colis

86

$\ell_k$

$\ell_1$

$\ell_p$

## Fig.10

$V_2/V_1$

3,00

2,00

$V_2/V_1$

1,00

0,00

87

0    0,2    0,4    0,6    l [m]

Fig.11

## Fig.12

r(k) & t(k)

## Fig.13

## Fig.14A

**Guide**

Dispositif de mise en file

## Fig.14B

$V_7$

$V_6$

$V_5$

$V_4$

$V_3$

Fig.15

**Fig.16**

**Fig.17**

**Fig.18**

## Fig.19A

## Fig.19B

## Fig.19C

Fig.20A

Fig.20B

**Fig.20C**

**Fig.20D**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 201417029 A
- US 20010030102 A
- DE 102013206790 A
- US 20041041100 A
- US 5746572 A
- US 2004104100 A1
- DE 102013206790 A1